(19) Europäisches Patentamt
European Patent Office
Office européen des brevets

(11) **EP 2 208 752 A1**

(12) **EUROPEAN PATENT APPLICATION**
published in accordance with Art. 153(4) EPC

(43) Date of publication:
**21.07.2010 Bulletin 2010/29**

(51) Int Cl.:
*C08J 9/20* (2006.01)    *C08J 9/232* (2006.01)

(21) Application number: **08844702.4**

(22) Date of filing: **09.10.2008**

(86) International application number:
**PCT/JP2008/068367**

(87) International publication number:
**WO 2009/057432 (07.05.2009 Gazette 2009/19)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **31.10.2007 JP 2007283302**

(71) Applicant: **JSP CORPORATION Tokyo 100-0005 (JP)**

(72) Inventors:
• **SHIMA, Masaomi**
**Yokkaichi-shi**
**Mie 510-0881 (JP)**
• **HARAGUCHI, Kenji**
**Yokkaichi-shi**
**Mie 510-0881 (JP)**
• **TAMURA, Tadashi**
**Yokkaichi-shi**
**Mie 510-0881 (JP)**

(74) Representative: **Wagner, Matthias et al Müller-Gerbes Wagner Albiger Patentanwälte Friedrich-Breuer-Strasse 72-78 53225 Bonn (DE)**

(54) **EXPANDED STYRENE RESIN BEADS AND MOLDED OBJECT FORMED FROM EXPANDED STYRENE RESIN BEADS**

(57)    Expanded styrene resin beads from which an in-mold expanded-bead molding having excellent fusion bonding among the expanded beads can be produced through a short cooling time by in-mold molding and which can attain an improvement in molding cycle. The expanded styrene resin beads are made of a styrene resin as the base resin and have an average bead diameter of 0.5-10 mm and an apparent density of 0.013-0.15 g/cm$^3$. The expanded beads are **characterized in that** the expanded beads each has many dimples having a maximum diameter of 5-100 $\mu$m in the surface and that when the expanded beads are secondarily expanded under the conditions of a heating steam temperature of 107°C and a heating time of 120 seconds, then the secondary expansion ratio determined by dividing the apparent density of the expanded beads before the secondary expansion (g/cm$^3$) by the apparent density of the expanded beads after the secondary expansion (g/cm$^3$) satisfies the relationship (1). Secondary expansion ratio $\leq$ -7.00 x {apparent density of expanded beads before secondary expansion (g/cm$^3$)} + 1.61 (1)

FIG. 3

**Description**

TECHNICAL FIELD

The present invention relates to expanded styrene resin bead and an expanded-bead molded article formed by in-mold molding of the expanded beads.

BACKGROUND ART

In general, expandable styrene resin beads are produced by dispersing under stirring a monomer such as styrene in an aqueous medium together with a suspending agent, thereby performing suspension polymerization, and impregnating the resin beads with a foaming agent during the polymerization or after completion of the polymerization. Frequently used foaming agents include aliphatic hydrocarbons, which allow the resin beads to swell only slightly. A process for industrially producing a molded article formed from expanded styrene resin beads using such expandable styrene resin beads thus produced, includes an expansion process of expanding the expandable resin beads and an in-mold molding process of molding the expanded beads. First, in the expansion process, the expandable styrene resin beads are heated using steam in a foaming machine and are expanded to a desired apparent density, to thereby form expanded beads. Subsequently, in the in-mold molding process, expanded beads that have been aged for a predetermined time are charged into the mold of a molding machine, and the mold is heated by introducing steam thereinto. The expanded beads are molded by fusion bonding, and then the inside of the mold is water-cooled and further cooled naturally under reduced pressure to lower the temperature of the expanded-bead molded article. After the pressure inside the mold is reduced to near the atmospheric pressure, the molded article is released from the mold, and thus expanded-bead molded article is obtained. During this cooling process, if the inside of the mold is not sufficiently cooled and depressurized, the expanded-bead molded article undergoes deformation after the release from the mold. In the in-mold molding process, since the time required by this cooling process occupies most of the time taken by the entire process of the in-mold molding process, the length of the cooling time exerts large influence on the productivity of the expanded-bead molded article. Therefore, there is a demand for the development of expanded styrene resin beads which require a short cooling time during in-mold molding, and of expandable styrene resin beads from which such expanded beads are obtained. For example, methods of shortening the cooling time during in-mold molding have been disclosed, which involve, in order to shorten the cooling time during in-mold molding, coating the surfaces of expandable styrene resin beads with a granular or particulate coating agent containing, as an ingredient, an aliphatic alcohol ester of a higher fatty acid such as one found in Patent Documents 1 and 2, particularly a triglycerin ester of a higher fatty acid which is solid at ordinary temperature, as represented by beef tallow hardened oil or hardened castor oil, using a blender, a mixer or the like, and making the coating agent to erode the bead surfaces to make it easy for the foaming agent to escape from the expanded beads during molding, thereby accelerating the rate of pressure reduction. Furthermore, Patent Document 3 discloses a method of applying a liquid organic compound.
Patent Document 1: Japanese Patent Application Laid-Open (JP-A) No. 57-16037
Patent Document 2: Japanese Patent Application Publication (JP-B) No. 58-56568
Patent Document 3: Japanese Patent Application Publication (JP-B) No. 54-19022

DISCLOSURE OF THE INVENTION

PROBLEM TO BE SOLVED BY THE INVENTION

However, in the case of the expanded beads obtained by coating the surfaces of expandable styrene resin beads with a coating agent and expanding the resin beads, shortening of the cooling time upon in-mold molding is insufficient, and further shortening of molding cycle is desired.
The present invention was made in view of such circumstances, and it is an object of the invention to provide expanded styrene resin beads which are capable of fusion bonding with one another even to the inner part of an expanded-bead molded article, so that the cooling time upon in-mold molding can be shortened, and which can give an expanded-bead molded article having excellent strength. It is another object of the present invention to provide an expanded-bead molded article excellent in strength such as flexural strength.

MEANS FOR SOLVING THE PROBLEM

That is, the gist of the present invention lies in the following:

(1) Expanded styrene resin beads made of a styrene resin as the base resin, having an average bead diameter of 0.5 to 10 mm and an apparent density of 0. 013 to 0.15 g/cm$^3$, wherein the expanded beads each have a number of dimples having a maximum diameter of 5 to 100 $\mu$m formed at the surface, and the secondary expansion ratio determined by secondarily expanding the expanded beads under the conditions of a heating steam temperature of 107°C and a heating time of 120 seconds, and then dividing the apparent density (g/cm$^3$) of the expanded beads before the secondary expansion by the apparent density (g/cm$^3$) of the expanded beads after the secondary expansion, satisfies expression (1):

$$\text{Secondary expansion ratio} \leq -7.00 \times \{\text{apparent density of}$$

$$\text{expanded beads before secondary expansion (g/cm}^3)\} + 1.61$$

$$\text{(Expression 1)}$$

(2) The expanded styrene resin beads according to (1) above, wherein the dimples present at the surface of the expanded beads form a mesh pattern.
(3) The expanded styrene resin beads according to (1) above, wherein the dimples present at the surface of the expanded beads and having a maximum diameter of 5 to 100 $\mu$m, have an average diameter of 10 to 70 $\mu$m, and the number of the dimples per unit area is 0.005 to 0.05 dimples/$\mu$m$^2$.
(4) The expanded styrene resin beads according to (1) above, wherein the dimples present at the surface of the expanded beads have an maximum depth of 1 to 20 $\mu$m.
(5) The expanded styrene resin beads according to (1) above, wherein the total areal ratio of the dimples is 20 to 100%.
(6) A molded article formed from expanded styrene resin beads having a density of 0.008 to 0.1 g/cm$^3$ and a thickness of 10 cm or more, produced by charging the expanded styrene resin beads according to any one of (1) to (5) above into a mold, heating the expanded beads in the mold, allowing the expanded beads to be fusion bonded with one another, and removing the resultant foam from the mold after cooling.

EFFECTS OF THE INVENTION

The expanded styrene resin beads of the present invention are capable of producing an expanded-bead molded article having excellent fusion bondability among expanded beads, irrespective of the expanded-bead molded article being an expanded-bead molded article of a general shape or a bulky expanded-bead molded article such as a block molded article, in a short cooling time by in-mold molding. Thus, the molding cycle of obtaining an expanded-bead molded article can be remarkably shortened. Furthermore, the expanded-bead molded article of the present invention is excellent in strength such as flexural strength.

BRIEF DESCRIPTION OF THE DRAWINGS

FIG. 1 is an explanatory diagram showing a method for measuring the total areal ratio of dimples in the expanded bead surface;
FIG. 2 is a graph showing the relationship between the fusion bonding ratio of expanded beads inside an expanded-bead molded article and the cooling time upon in-mold molding of expanded beads;
FIG. 3 is an electron microscopic photograph (magnification 200 times) of the surface of an expanded bead of Example 1;
FIG. 4 is an electron microscopic photograph (magnification 200 times) of the surface of an expanded bead of Comparative Example 1;
FIG. 5 is an electron microscopic photograph (magnification 200 times) of the surface of an expanded bead of Example 2;
FIG. 6 is an electron microscopic photograph (magnification 200 times) of the surface of an expanded bead of Example 3;
FIG. 7 is an electron microscopic photograph (magnification 200 times) of the surface of an expanded bead of Comparative Example 2;

FIG. 8 is an electron microscopic photograph (magnification 500 times) of the surface of an expanded bead of Comparative Example 5;

FIG. 9 is a graph showing the relationship between the heating time and the secondary expansion ratio of expanded beads having different total areal ratios of dimples;

FIG. 10 is a graph showing the relationship between the secondary expansion ratio and the apparent density, for expanded beads that have dimples and expanded beads that do not have dimples;

FIG. 11 is an electron microscopic photograph (magnification 1000 times) of the cross-sectional surface layer of an expandable resin bead of Example 1; and

FIG. 12 is an electron microscopic photograph (magnification 1000 times) of the cross-sectional surface layer of an expandable resin bead of Example 2.

BEST MODES FOR CARRYING OUT THE INVENTION

The base resin of the expanded styrene resin beads of the present invention is a styrene resin. The styrene resin as used in the present invention includes homopolymers or copolymers of a styrene-based aromatic vinyl monomer (hereinafter, simply referred to as aromatic vinyl monomer), copolymers containing more than 50% by weight of an aromatic vinyl monomer and less than 50% by weight of a comonomer other than an aromatic vinyl monomer, which is copolymerizable with the aromatic vinyl monomer, and the homopolymers or copolymers mentioned above as well as derivatives of those polymers. Here, the proportion of the aromatic vinyl monomer component unit in the styrene resin is preferably 70 to 100% by weight. In such cases, the resin becomes excellent in uniformity in terms of properties. Examples of the aromatic vinyl monomer include styrene, $\alpha$-methylstyrene, o-methylstyrene, m-methylstyrene, p-methylstyrene, p-ethylstyrene, 2,4-dimethylstyrene, p-methoxystyrene, p-phenylstyrene, p-n-butylstyrene, p-n-hexylstyrene, p-octylstyrene, p-t-butylstyrene, o-chlorostyrene, m-chlorostyrene, p-chlorostyrene, 2,4-dichlorostyrene, 2,4,6-tribromostyrene, styrenesulfonic acid, sodium styrenesulfonate, and the like. Furthermore, examples of the comonomer component other than the aromatic vinyl monomer include esters of acrylic acid and aliphatic alcohols having 1 to 10 carbon atoms, such as methyl acrylate, ethyl acrylate, propyl acrylate, butyl acrylate and 2-ethylhexyl acrylate; esters of methacrylic acid and aliphatic alcohols having 1 to 10 carbon atoms, such as methyl methacrylate, ethyl methacrylate, propyl methacrylate, butyl methacrylate and 2-ethylhexyl methacrylate; nitrile group-containing unsaturated compounds such as acrylonitrile and methacrylonitrile; and the like.

It is particularly preferable for the base resin of the expanded styrene resin beads of the present invention to have a proportion of the styrene monomer component unit of 70 to 100% by weight, from the viewpoints of excellent expandability, excellent in-mold moldability of the resulting expanded beads, and general-purpose usability.

The base resin of the expanded styrene resin beads of the present invention preferably has a weight average molecular weight of 180,000 to 400,000. The weight average molecular weight is a value measured by a GPC method and calculated relative to polystyrene standards. If the weight average molecular weight is less than 180,000, it is feared that strength of the obtained expanded-bead molded article may be decreased. On the other hand, if the weight average molecular weight is greater than 400,000, expandability of the expandable resin beads is reduced, and it becomes difficult to expand the resin beads to a target expansion ratio (for example, 50 to 60 times), or it becomes difficult for the expanded beads to be fusion bonded during in-mold molding. Thus, it is feared that strength of the expanded-bead molded article may be decreased. The weight average molecular weight of the base resin is more preferably 200,000 to 380,000, and even more preferably 220,000 to 350,000.

The expanded styrene resin beads of the present invention have a number of dimples with a maximum diameter of 5 to 100 $\mu$m formed at the surface of the expanded beads. Those dimples have circular, polygonal or irregularly-shaped openings and are partitioned around the rim. When the maximum length between two opposite rim parts is defined as the maximum diameter of the dimple, the maximum diameter is 5 to 100 $\mu$m. While there are rare occasions where dimples having a maximum diameter of greater than 100 $\mu$m are recognized at the surface of the expanded styrene resin beads of the present invention, there are also occasions where dimples having a maximum diameter of less than 5 $\mu$m are recognized.

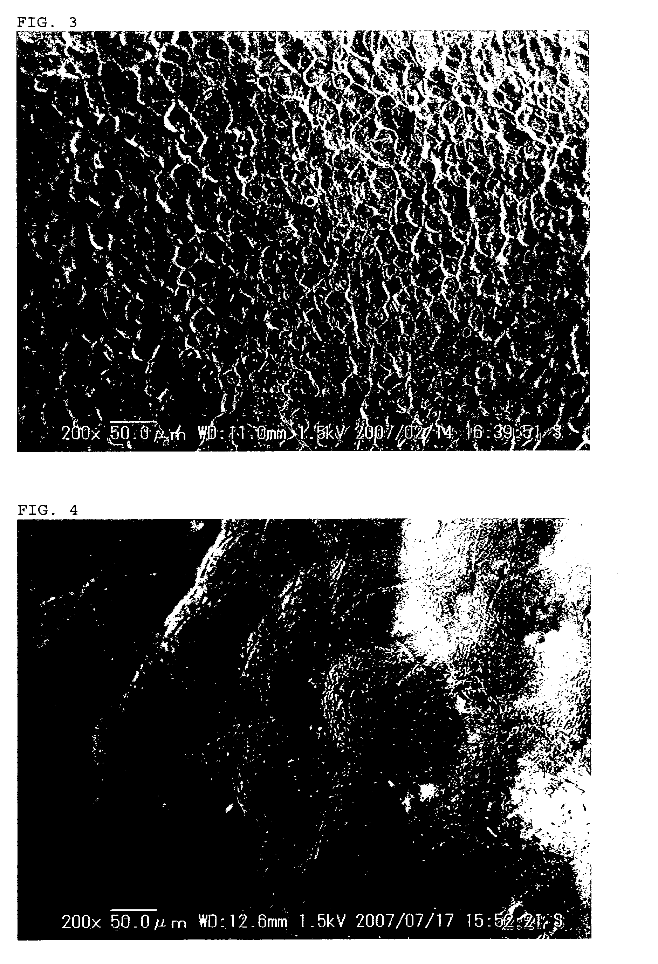

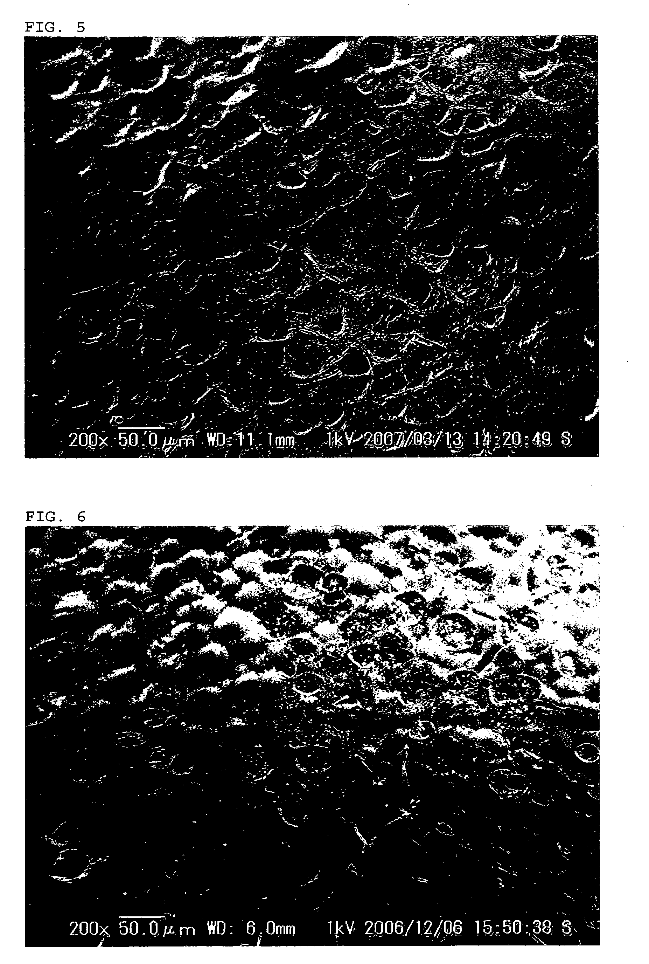

The dimples at the surface of the expanded beads will be described in more detail with reference to the drawings. FIG. 3 is an electron microscopic photograph (magnification 200 times) of the surface of an expanded bead of the present invention obtained in Example 1 that will be described later. A number of dimples having circular, polygonal or irregular-shaped openings and having a maximum diameter of about 25 $\mu$m are formed in mixture approximately all over the surface of the expanded bead to present a mesh pattern. Furthermore, such an expanded bead can be said to have mesh-shaped protrusions formed at the surface of the expanded beads. FIG. 5 is an electron microscopic photograph (magnification 200 times) of the surface of an expanded bead of the present invention obtained in Example 2 that will be described later. A number of dimples having circular or irregular-shaped openings and having a maximum diameter of about 10 to 80 $\mu$m are formed in mixture at an areal ratio of approximately 50% of the surface of the expanded bead to present a mesh pattern around the rim of the openings. FIG. 6 is an electron microscopic photograph (magnification 200 times) of the surface of an expanded bead of the present invention obtained in Example 3 that will be described later. A number of dimples having circular openings and having a maximum diameter of about 20 to 80 $\mu$m are formed at an areal ratio of approximately 20% of the surface of the expanded bead.

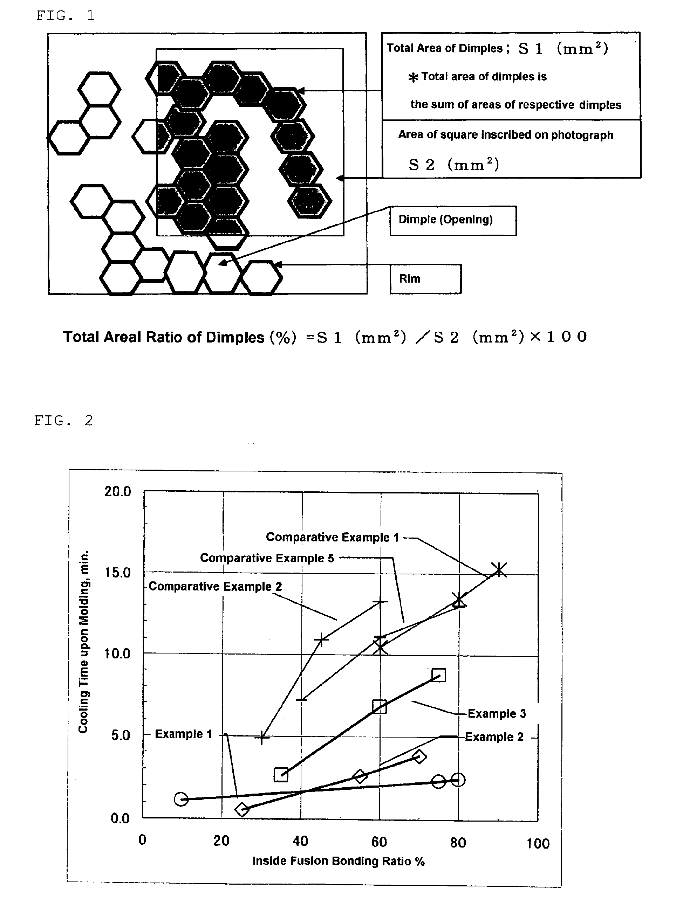

The expanded beads of the present invention can shorten the molding cycle upon in-mold molding the expanded beads, by having a number of dimples at the surface of the expanded beads as described above, and from the viewpoint of the significance of the molding cycle shortening effect, the total areal ratio of dimples is preferably 20 to 100%, and more preferably 50 to 100%. The total areal ratio of dimples according to the present invention is a value obtained, as shown in the expression (2) described below, by dividing the total area measured of the dimple openings by the area of the square inscribed on the photograph, and is an arithmetic mean value of the values obtainable by conducting the same operation for ten expanded beads. Here, the total areal ratio of the dimples can be determined by the following procedure. An image of the surface of an expanded styrene resin bead is taken with a scanning electron microscope (a magnification of 200 times is preferred). Subsequently, as shown in FIG. 1, a square which measures 200 $\mu$m on each side is inscribed on the photograph, and the area of the openings surrounded by the rims of the dimples present within the square (the square is drawn while avoiding cutting across the dimples as much as possible, and in case where the line segment constituting an edge of the square cuts across the opening of a dimple, the part surrounded by the line segment and the rim of the dimple opening cut across by the line segment was defined as the area of the dimple opening) is measured. The value of adding up the areas of the respective dimple openings (S1 (mm$^2$)) is divided by the area of the square inscribed on the photograph, which measures 200 $\mu$m on each side, (S2 (MM$^2$) = 0.04 (mm$^2$)), and thus the total areal ratio (%) of dimples is determined. The same operation is conducted for 10 expanded beads to determine the respective total areal ratios of dimples, and an arithmetic mean of the obtained total areal ratios of dimples calculated therefrom is designated as the total areal ratio (%) of dimples according to the present invention.

$$\texttt{Total areal ratio of dimples = S1 (mm}^2\texttt{)/S2 (mm}^2\texttt{) × 100}$$

$$\texttt{(Expression 2)}$$

Furthermore, the maximum depth of the dimples (having the same meaning as the height of the mesh part in the expanded beads of Example 1) is preferably 1 to 20 $\mu$m, and more preferably 2 to 10 $\mu$m. The depth of a dimple can be determined by using an atomic force microscope or the like, and the maximum depth of dimples is determined by measuring the maximum depth of dimples for any ten dimples in one grain of the expanded styrene resin bead, and calculating an average value thereof. The same operation is conducted for ten expanded beads to determine the respective average values of the maximum depth of dimples, and an arithmetic mean of the determined average values of the maximum depth of dimples in ten expanded beads is calculated, so that this arithmetic mean is used as the maximum depth of dimples according to the present invention.

The average diameter of the dimples at the surface of an expanded bead is preferably 10 to 70 $\mu$m, more preferably 10 to 50 $\mu$m, and particularly preferably 15 to 40 $\mu$m. Furthermore, in regard to the average diameter of the dimples, an image of the surface of an expanded styrene resin bead is taken with a scanning electron microscope (a magnification of 200 times is preferred), and a square which measures 200 $\mu$m on each side is inscribed on the photograph. For all of those dimples having a maximum diameter of 5 to 100 $\mu$m, which are present in their entireties within the range surrounded by the square, their maximum diameters are determined, and an arithmetic mean of the determined maximum diameters is determined. The same operation is conducted for ten expanded beads to determine the respective average values of the maximum diameter of dimples, and an arithmetic mean of the determined average values of the maximum diameter of dimples in ten expanded beads is calculated, so that this arithmetic mean is used as the average diameter of dimples according to the present invention.

If the maximum depth of dimples is too shallow, and/or if the average diameter of dimples is too large, it is feared that the molding time shortening effect may be insufficient upon in-mold molding. On the other hand, if the maximum depth of dimples is too deep, and/or if the average diameter of dimples is too small, the range of the heating conditions for in-mold molding from which a satisfactory expanded-bead molded article is obtainable, is narrowed, and it is feared that the fusion bonding among the expanded beads in the obtainable expanded-bead molded article may be insufficient.

The number of dimples at the surface of an expanded bead is preferably 0.005 to 0.05 dimples/$\mu$m$^2$, and more preferably 0.01 to 0.05 dimples/$\mu$m$^2$. If the number of dimples described above is too small, it is feared that the effect of shortening the molding time required by in-mold molding may be insufficient. On the other hand, if the number of dimples is too large, the range of the heating conditions for in-mold molding for obtaining a satisfactory expanded-bead molded article is narrowed, and it is feared that the fusion bonding among the expanded beads in the obtainable expanded-bead molded article may be insufficient. The number of dimples at the surface of an expanded bead can be determined by the following procedure. First, an image of the surface of an expanded styrene resin bead is taken with a scanning electron microscope (a magnification of 200 times is preferred). Subsequently, a square which measures 200 $\mu$m on each side is inscribed on the photograph, and the number of dimples present within the range surrounded by the square is counted (however, those dimples intersecting with the upper edge and/or the right edge of the square are counted into the number of dimples, while those dimples intersecting with the lower edge and/or the left edge are not counted into the number of dimples. In addition, those dimples intersecting with the angle formed by the upper edge and the left edge which lie perpendicularly to each other, are counted into the number of dimples, while those dimples intersecting with the angle formed by the lower edge and the right edge which lie perpendicularly to each other, are not counted into the number of dimples). The determined number of dimples (dimples) is divided by the area ($\mu m^2$) of the square inscribed on the photograph, which measures 200 $\mu$m on each side, and the resultant value is designated as the number of dimples at the surface of the expanded bead (dimples/$\mu m^2$).

The cell size of the expanded styrene resin beads of the present invention is preferably 30 to 150 $\mu$m, and particularly preferably 40 to 100 $\mu$m. If the cell size is too small, the range of molding conditions is narrowed, and it is feared that an expanded molded article having a high degree of fusion bonding in the inside may not be obtained. If the cell size is too large, it is feared that the strength of the resulting expanded molded article may be decreased. Upon measuring the cell size of expanded beads, first, an expanded styrene resin bead is bisected such as to pass through the center of the expanded bead, and a photograph of the cross-section is taken with a scanning electron microscope. Subsequently, a straight line is drawn on the photograph, the number of bubbles intersecting with the straight line is counted, and the length of the straight line is divided by the number of bubbles to thereby determine the bubble size per bubble. This value is designated as the cell size ($\mu$m). This operation is similarly conducted for 10 expanded beads, and the cell size of the respective expanded beads is determined. An arithmetic mean of the obtained cell sizes is calculated, and thereby the cell size ($\mu$m) can be determined.

The expanded beads of the present invention have an apparent density of 0.013 to 0.15 g/cm$^3$, preferably 0.015 to 0.1 g/cm$^3$, and more preferably 0.02 to 0.05 g/cm$^3$. If the apparent density is too low, the strength of the resulting expanded molded article is insufficient. In contrast, if the apparent density is too high, it is economically inefficient. Furthermore, when the apparent density is too low, the secondary expansion power of the expanded beads becomes larger than the secondary expansion restraint force caused by dimple formation (formation of the mesh pattern in FIG. 3 and FIG. 5), and it is difficult to obtain the effect of shortening the molding cycle. The apparent density of the expanded styrene resin beads is determined by providing a mess cylinder containing water at 23°C, sinking a group of 500 or more expanded beads which have been left to stand for 2 days under the conditions of a relative humidity of 50% at 23°C and 1 atm, in the mess cylinder using a wire mesh or the like, thereby reading the volume V1 (cm$^3$) of the group of expanded beads from the water level increment, and dividing the weight W1 (g) of the group of expanded beads placed in the mess cylinder by the volume. The average bead diameter of the expanded beads of the present invention is 0.5 to 10 mm, preferably 1 to 8 mm, and more preferably 2 to 6 mm. Here, in regard to the average bead diameter of the expanded beads, the respective maximum external dimensions of 500 or more expanded beads which have been left to stand for 2 days under the conditions of a relative humidity of 50% at 23°C and 1 atm were measured with vernier calipers, and an arithmetic mean value of the measured values is designated as the average bead diameter of the expanded beads.

As described above, the expanded beads of the present invention have a number of dimples having a specific size formed at the surface of the expanded beads. In regard to the method for producing the expanded beads, the following method may be mentioned.

There may be mentioned a method of obtaining expandable styrene resin beads by dispersing, in a sealed vessel equipped with a stirring device, an aromatic vinyl monomer such as a styrene monomer together with a plasticizer and a polymerization initiator, in an aqueous medium in the presence of an appropriate suspending agent, subsequently initiating a polymerization reaction, and adding a foaming agent is added during the polymerization or after further completion of the polymerization. In this method, the addition of a plasticizer as a dimple forming agent, and the timing for addition of a foaming agent and impregnation are considered critical. That is, the expanded beads of the present invention having a number of dimples of a specific size formed at the surface, can be obtained by heating and expanding the expandable styrene resin beads that are obtained by adding one or a mixture of two or more compounds selected from the group consisting of liquid paraffin, higher fatty acid esters and olefins (hereinafter, these plasticizers are referred to as dimple forming agents), and by adding and impregnating a foaming agent at a specific timing. On the other hand, it has been verified that expanded beads having dimples at the surface, such as the expanded beads of the present invention, cannot be obtained from those expandable resin beads obtained by adding D-limonene, di-2-ethylhexyl phthalate or the like, which are considered useful as plasticizers for expandable resin beads. The dimple forming agent not only forms many dimples at the surface of expanded beads, but also acts as a plasticizer, even though not as effective as conventional plasticizers. Thus, the dimple forming agent has an effect of increasing expandability of expandable styrene resin beads.

The amount of addition of the dimple forming agent is preferably 0.1 to 3 parts by weight, and particularly preferably 0.3 to 2 parts by weight, relative to 100 parts by weight of the styrene resin, for the purpose of forming the intended dimples in the expanded beads. If the amount of addition of the dimple forming agent is too small, the plasticizing effect is insufficient, and it is feared that expansion may not be achieved to a desired expansion ratio. On the other hand, if the amount of addition of the dimple forming agent is too large, it is feared that the expandable resin beads may coalesce, and many bead clusters (clusters formed by adhesion of plural beads) larger than 2 mm in size may be included. If use is made of expanded beads obtained by expanding those expandable resin beads which contain many of such large bead clusters, it is feared that the mold-fillability may be decreased, or it is feared that the strength or heat resistance of the obtainable expanded molded article may be decreased, and the production cost may be increased. The liquid paraffin mentioned above may be a mixture of alicyclic hydrocarbon compounds having a branched structure and/or a cyclic structure represented by CmHn (n < 2m+2, and m being a positive integer). The average carbon number of the liquid paraffin: m is preferably 10 to 40, and particularly preferably 20 to 35. When liquid paraffin having an average carbon number of fewer than 10, or liquid paraffin having an average carbon number of greater than 40 are used, the dimples are not formed at the surface of the expanded beads, and it is feared that the molding time shortening effect may not be obtained during molding.

On the other hand, the higher fatty acid esters may be esters of alcohols such as butanol, stearyl alcohol, glycerin and sorbitol, with higher fatty acids such as lauric acid, palmitic acid, stearic acid and behenic acid. The alcohols are preferably polyhydric alcohols such as glycerin and sorbitol. The higher fatty acids preferably have 10 to 22 carbon atoms. According to the present invention, the higher fatty acid ester is particularly preferably glycerin tristearate, which is obtainable from higher fatty acids containing stearic acid as a main component (meaning that the component is included in the total fatty acids constituting the ester, at a proportion of 50% by weight or more), and glycerin. The olefins mean compounds having 10 to 40 carbon atoms, or mixtures thereof; however, compounds having 15 to 35 carbon atoms, or mixtures thereof are preferred. In particular, α-olefins are preferred as the olefins. If an olefin having too small a carbon number or an olefin having too large a carbon number is used, it is feared that the dimples may not be formed at the surface of the expanded beads, and the molding time shortening effect may not be obtained upon molding. In addition, it is preferable that the dimple forming agent is mixed and dissolved in a vinyl monomer such as a styrene monomer previously before the polymerization reaction.

Examples of the polymerization initiator include organic peroxides such as cumene hydroxyperoxide, dicumyl peroxide, t-butyl peroxy-2-ethylhexanoate, t-butyl peroxybenzoate, benzoyl peroxide, t-butyl peroxyisopropylcarbonate, t-amyl peroxy-2-ethylhexylcarbonate, hexyl peroxy-2-ethylhexylcarbonate, and lauroyl peroxide; azo compounds such as azobisisobutyronitrile; and the like, which are soluble in vinyl monomers and have a 10-hour half-life temperature of 50 to 120°C. These polymerization initiators can be used singly or in combination of two or more kinds. The amount of use of the polymerization initiator is preferably 0.01 to 3 parts by weight relative to 100 parts by weight of the vinyl monomer. As the suspending agent, for example, a hydrophilic polymer such as polyvinyl alcohol, methylcellulose or polyvinylpyrrolidone; a sparingly water-soluble inorganic salt such as tricalcium phosphate or magnesium pyrrolate; or the like can be used, and if necessary, a surfactant may be used in combination. In the case of using a sparingly water-soluble inorganic salt, it is preferable to use in combination with an anionic surfactant such as sodium alkyl sulfonate, sodium dodecylbenzenesulfonate, disodium dodecyl diphenyl ether sulfonate or sodium α-olein sulfonate. The amount of use of the suspending agent is preferably 0.01 to 5 parts by weight relative to 100 parts by weight of the vinyl monomer. In the case of using the previously mentioned sparingly water-soluble inorganic salt and anionic surfactant in combination, it is preferable to use the sparingly water-soluble inorganic salt in an amount of 0.05 to 3 parts by weight and the anionic surfactant in an amount of 0. 0001 to 0. 5 parts by weight, relative to 100 parts by weight of the vinyl monomer.

Furthermore, the vinyl monomer may also be added with those additives that are generally used in the production of expandable styrene resin beads, flame retardants such as esters or acetals of dibromopropanol, tribromophenol, tribromostyrene and tribromophenol allyl ether such as 1,2,3,4-tetrabromobutane, 1,2,4-tribromobutane, tetrabromopentane, tetrabromobisphenol A, 2,2-bis(4-aryloxy-3,5-dibromophenyl)propane, 2,2-bis(4-hydroxyethoxy-3,5-dibromophenyl)propane, 2,2-bis(4-(2,3-dibromo)propyloxy-3,5-dibromophenyl)propane, pentabromodiphenyl ether, hexabromodiphenyl ether, octabromodiphenyl ether, decabromodiphenyl ether, tribromophenol, dibromoethylbenzene, 1,2,3,4,5,6-hexabromocyclohexane, 1,2,5,6,9,10-hexabromocyclododecane, octabromocyclohexadecane, 1-chloro-2,3,4,5,6-pentabromocyclohexane and tris(2,3-dibromopropyl) phosphate; auxiliary flame retardants such as dicumyl peroxide, cumene hydroxyperoxide and 2,3-dimethyl-2,3-diphenylbutane; cell regulating agents such as methyl methacrylate-based copolymers, polyethylene wax, talc, silica, ethylenebisstearylamide and silicone; antistatic agents, electroconducting agents, bead size distribution regulating agents, chain transfer agents, and polymerization inhibitors, or may be added with rubber components such as butadiene rubber and styrene-butadiene rubber.

The foaming agent is preferably a volatile organic compound having a boiling point of 80°C or lower. As the volatile organic compound having a boiling point of 80°C or lower, use can be made of one or a mixture of two or more compounds selected from saturated hydrocarbon compounds such as methane, ethane, propane, n-butane, isobutane, cyclobutane, n-pentane, isopentane, neopentane, cyclopentane, n-hexane and cyclohexane; lower alcohols such as methanol and ethanol; ether compounds such as dimethyl ether and diethyl ether; and the like. Among the foaming agents mentioned above, hydrocarbon compounds having 3 to 6 carbon atoms are preferred. More preferably, the foaming agent is a hydrocarbon compound having 4 carbon atoms.

The content of the foaming agent in the expandable styrene resin beads is preferably 2 to 15% by weight, and more preferably 3 to 12% by weight. If the content of the foaming agent is too small, expandability is decreased, and it becomes difficult to expand the beads to a desired expansion ratio. On the other hand, if the content of the foaming agent is too large, the cell size of the resulting expanded beads becomes coarse, and it is feared that the strength of the resulting expanded molded article may be decreased, or expansion molding processing may be difficult.

The time for addition of the foaming agent is important in view of obtaining expanded beads having dimples. It is preferable to add the foaming agent after the polymerization conversion ratio of the styrene monomer has reached 60% to 95%, and more preferably after the polymerization conversion ratio has reached 70% to 95%. If the foaming agent is added at a time point when the polymerization conversion ratio is low, it is feared that the desired dimples may not be formed at the surface of the expanded beads, and therefore, the foaming agent is added generally at a time point when the polymerization conversion ratio is 60% or higher.

Specific reaction conditions such as the temperature and time at which the polymerization conversion ratio reaches 60% or higher, vary with the blend of various components, polymerization conditions and the like, and thus the reaction conditions cannot be determined. However, for example, the polymerization conversion ratio can be regulated to 60% or higher by increasing the temperature approximately to 90°C at a rate of about 0.5 to 1.0°C/min, increasing the temperature to about 95°C at a rate of about 0.005 to 0.02°C/min, further increasing the temperature to about 120°C at a rate of about 0.05 to 0.3°C/min, and then maintaining the system under stirring at that temperature for about 3 to 9 hours.

The polymerization conversion ratio according to the present invention can be determined as described below. About 5 g of a cake-like polymer is taken out from the reactor before adding a foaming agent and placed on a filter paper, and the polymer is lightly pressed against the filter so that the filter paper absorbs moisture. About 1.5 g of the cake-like polymer is taken from the filter into a 20-ml beaker, and is weighed in grams to the fourth decimal place. This is designated as "mass before re-immersion." Subsequently, 1 g of the polymer (with a purity of 100%).is dissolved in 5 to 6 ml of chloroform. 120 to 130 ml of methanol is placed in a separately provided 200-ml beaker, and while the content in the beaker is stirred with a stirrer tip, the previously prepared chloroform solution is added dropwise in small amounts to the beaker containing methanol. Finally, 10 ml of methanol is poured also into the 20-ml beaker to recover the polymer adhered to the vessel walls, and the solution is added to the 200-ml beaker. Subsequently, the solution in the 200-ml beaker is stirred for several hours and then filtered to recover the polymer. The recovered polymer is dried in air, and then is subjected to drying in a vacuum dryer under the conditions at 80°C for a day or longer. The amount of recovery of the polymer obtained by this operation is weighed in grams to the fourth decimal place, and this is designated as "mass after re-immersion."

The "mass before re-immersion" and the "mass after re-immersion" determined as described above are inserted into the following expression (3), and thereby the polymerization conversion ratio (%) can be determined.

$$\text{Polymerization conversion ratio (\%)} = (\text{"mass after re-immersion"}/\text{"mass before re-immersion"}) \times 100 \quad \text{(Expression 3)}$$

The size of the expandable styrene resin beads for obtaining the expanded beads of the present invention is such that the average bead diameter is preferably 0.3 to 2 mm, and more preferably 0.5 to 1.5 mm. If the average bead diameter is too small, the expansion efficiency is likely to be decreased, and if the average bead diameter is too large, the resulting expanded beads are enlarged so that the mold-fillability becomes prone to decrease upon in-mold molding. Here, the average bead diameter of the expandable styrene resin beads is determined such that the respective maximum external dimensions of 500 or more expandable resin beads are measured with vernier calipers, and an arithmetic mean value of the measures values is calculated.

As the method of heating and expanding the expandable styrene resin beads, a well known method may be used, and for example, there may be mentioned a method of using a foaming machine equipped with a stirring device, and expanding the beads by heating with steam or the like.

In the present invention, the mechanism of the formation of dimples at the surface of expanded beads as described above is not clear but is speculated as follows. It is believed that, in the course of the process in which the foaming agent added in the middle of polymerization of styrene resin beads is dissolved in the monomer phase, and then polymerization proceeds to convert the monomer into a polymer, a portion of the foaming agent which has failed to dissolve into the polymer causes phase separation, and as a result, a number of fine dimples are formed at the surface of the expandable resin beads. Here, it is inferred that the aforementioned plasticizer added as the dimple forming agent supports the phase separation of foaming agent, and it is believed that, the presence of the plasticizer easily causes the phase separation of foaming agent. In regard to the dimples at the surface of the expandable resin beads, it is preferable that dimples having a diameter of 0.1 to 5 $\mu$m are formed at a ratio of 5 to 70 dimples/100 $\mu$m$^2$, and more preferably 10 to 50 dimples/100 $\mu$m$^2$. Furthermore, the expandable resin beads are such that not only a number of fine dimples are formed at the surface of the expandable resin beads, but also, if the cross-sections of expandable resin beads are observed, voids are formed in the surface layer of the cross-sections of the expandable resin beads. In regard to these voids, it is preferable that voids having a diameter in the range of 2 to 6 $\mu$m are formed in the surface layer having a thickness in the range of 50 $\mu$m from the surface of the expandable resin bead, at a density of 0.06 to 0.8 voids/ 100 $\mu$m$^2$, and more preferably 0.1 to 0.5 voids/100 $\mu$m$^2$. It is speculated that these fine dimples and voids formed in the expandable resin beads are stretched when the expandable resin beads are expanded later, and become dimples that are present at the surface of the expanded beads.

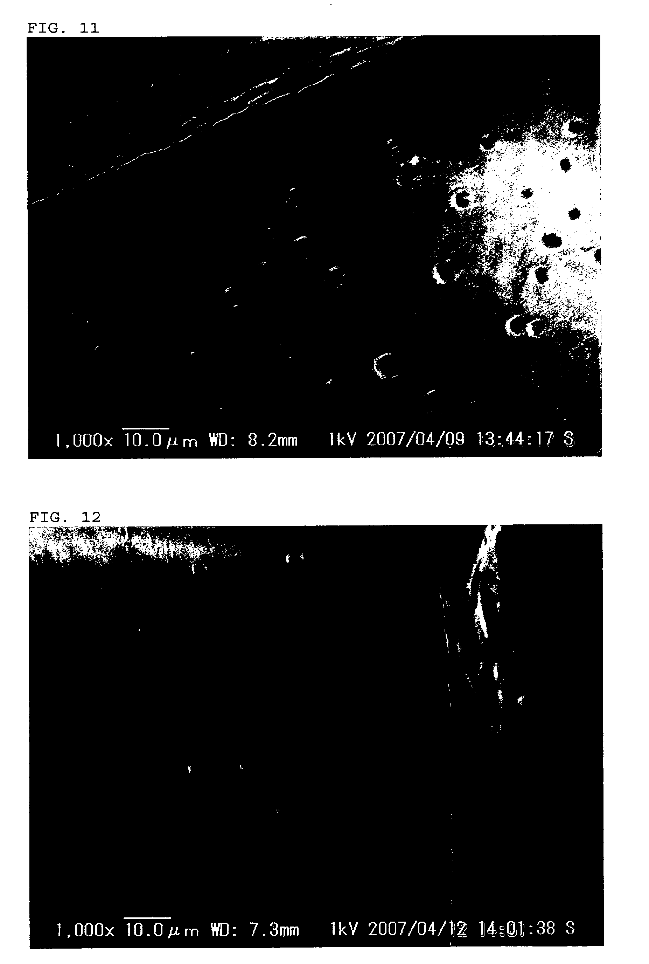

For example, as shown in FIG. 11, the expandable resin beads according to Example 1 have voids having a diameter in the range of 2 to 6 $\mu$m formed in the cross-sectional surface layer of an expandable resin bead at a density of 0.32 voids/100 $\mu$m$^2$, and have dimples having a diameter in the range of 0.1 to 5 $\mu$m formed at the surface of the expandable resin bead at a density of 17.6 dimples/100 $\mu$m$^2$. Here, conventional expandable resin beads do not have voids in the cross-sectional surface layer. The fine dimples formed at the surface of an expandable styrene resin bead can be confirmed by taking an image of the surface of the expandable styrene resin bead with a scanning electron microscope (magnification of 1000 times is preferred). A square which measures 50 $\mu$m on each side is inscribed on the obtained photograph, the number of dimples present in the range surrounded by the square is counted (however, those dimples intersecting with the upper edge and/or the right edge of the square are counted into the number of dimples, while those dimples intersecting with the lower edge and/or the left edge are not counted into the number of dimples. In addition, those dimples intersecting with the angle formed by the upper edge and the left edge which lie perpendicularly to each other, are counted into the number of dimples, while those dimples intersecting with the angle formed by the lower edge and the right edge which lie perpendicularly to each other, are not counted into the number of dimples). A value determined by dividing the number of counted dimples (dimples) by 25, is designated as the number of fine dimples (dimples/100 $\mu$m$^2$) at the surface of the expandable styrene resin bead. The voids can be confirmed by taking an image of the cross-sectional surface layer of an expandable styrene resin bead with a scanning electron microscope (magnification of 1000 times is preferred). The total number of voids having a diameter of 2 to 6 $\mu$m that are present in the surface layer having a thickness in the range of 50 $\mu$m from the surface of the resin bead as shown in the obtained photograph, is counted. A value determined by dividing the counted number by the area ($\mu$m$^2$) of the surface layer, is multiplied by 100, and the value thus calculated is designated as the number of voids (voids/100 $\mu$m$^2$).

Furthermore, expandable resin beads have been traditionally added with xylene as a plasticizer in some occasions, and these expandable resin beads have dimples at the surface. However, the expanded beads obtained by expanding the expandable resin beads do not have a number of dimples having a specific size formed at the surface. The reason that although dimples are present at the surface of the expandable resin beads to which xylene has been added in the stage of expandable resin beads, dimples such as those present in the expanded beads of the present invention are not formed at the surface of expanded beads resulting therefrom, is thought to be because, firstly, the number of dimples at the surface is small as compared with the expandable resin beads for obtaining the expanded beads of the present invention, or the depth of the dimples is shallow and insufficient. Secondly, since voids were not seen in the surface layer when the cross-section of an expandable resin bead added with xylene was observed, it is speculated that the presence and absence of voids in the surface layer of the expandable resin beads also has influence on the formation of dimples at the surface of the expanded beads. Also, if the number of fine dimples at the surface of the expandable resin beads is excessively high, it is difficult for the obtainable expanded beads to have a number of dimples at the surface.

The inventors of the present invention produced an expanded-bead molded article by polymerizing a monomer to which a dimple forming agent such as liquid paraffin had been added prior to the polymerization of a styrene resin, impregnating the polymer with a foaming agent, expanding the resultant, and in-mold molding the expanded beads obtained thereby. However, they unexpectedly found that cooling time can be markedly shortened. In regard to the cooling upon in-mold molding during the production of an expanded-bead molded article, a method of terminating the cooling when the surface pressure measured by a surface pressure meter installed on an inner wall of the molding mold decreases to a predetermined pressure, is generally employed. Upon termination of the cooling, the mold is opened, and then the molded article is released from the mold. However, when the expanded beads of the present invention are used, the rate of reaching the predetermined pressure after initiating cooling is dramatically increased (the cooling time is dramatically shortened). Thus, even if the temperature inside the released expanded molded article is higher than the temperature of the expanded-bead molded article produced by using the conventional expanded beads having no dimples at the surface, unexpectedly, the released expanded-bead molded article does not undergo a deformation due to insufficient cooling.

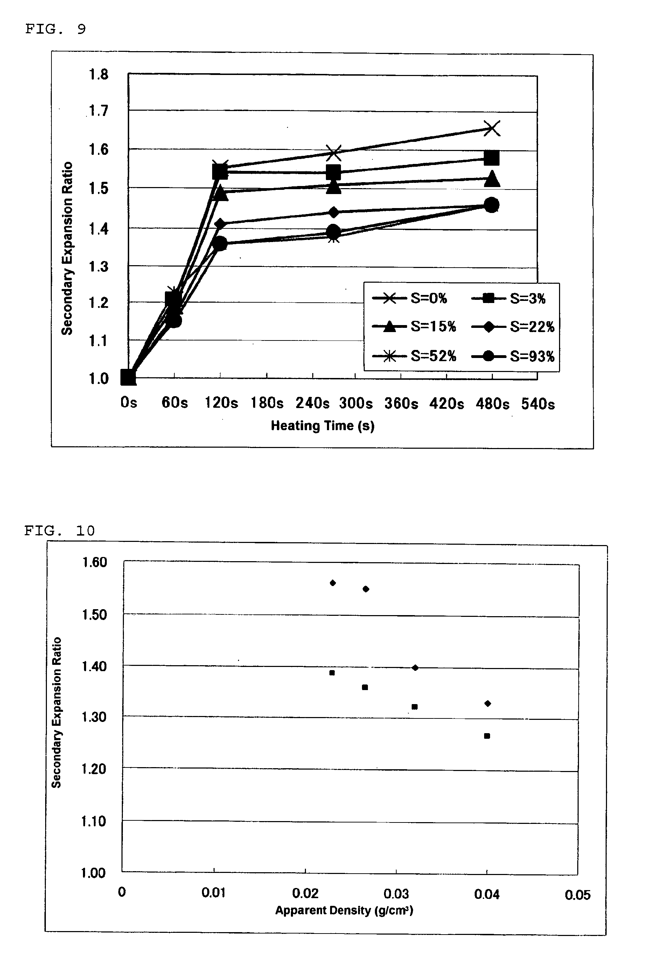

When a molded article is produced using the expanded beads of the present invention, the reason that the cooling is completed in a short time is thought to be because a number of dimples present in a mesh pattern or the like at the surface of the expanded beads of the present invention, suppresses the expansive force of the inner part of the expanded-bead molded article which is still under high temperature during in-mold molding. This is supported by the graphs shown in FIG. 9 and FIG. 10. FIG. 9 is a graph showing the relationship between the heating time and the secondary expansion ratio of expanded beads having different total area ratios of dimples (S). The secondary expansion ratio of the expanded beads was determined, for expanded beads having different total areal ratios of dimples (S) and an apparent density of 0.027 $g/cm^3$, by obtaining secondary expanded beads under a constant condition of heating steam temperature at 107°C while varying the heating time, and dividing the apparent density ($g/cm^3$) of the expanded beads before secondary expansion by the apparent density ($g/cm^3$) of the expanded beads after secondary expansion. As it can be seen from the graph shown in FIG. 9, with regard to the heating time of 120 to 480 seconds, those expanded beads having total areal ratios of dimples of 22%, 52% and 93% obviously have smaller secondary expansion ratios as compared to those expanded beads having total areal ratios of dimples of 0%, 3% and 15%. Furthermore, the expanded beads having a total areal ratio of dimples of from 0 to 50% show a tendency that as the total areal ratio increases, the secondary expansion ratio is decreased; however, the expanded beads having a total areal ratio of dimples of 50% or greater do not show any significant changes in the value of the secondary expansion ratio. FIG. 10 is a graph showing the relationship between the apparent density and the secondary expansion ratio of the expanded beads before secondary expansion, for expanded beads that have dimples and expanded beads that do not have dimples. In FIG. 10, symbol ♦ represents a plot of the secondary expansion ratio against the apparent density of expanded beads having a total areal ratio of dimples of 0% but different densities. Symbol ■ represents a plot of the secondary expansion ratio against the apparent density of expanded beads before secondary expansion, for expanded beads having a total areal ratio of dimples of 93% and an apparent density of 0.04 $g/cm^3$; expanded beads having a total areal ratio of dimples of 93% and an apparent density of 0.032 $g/cm^3$; expanded beads having a total areal ratio of dimples of 93% and an apparent density of 0.027 $g/cm^3$; and expanded beads having a total areal ratio of dimples of 93% and an apparent density of 0.023 $g/cm^3$, respectively. Here, the secondary expansion ratio of the expanded beads in FIG. 10 was determined by secondarily expanding the expanded beads under the secondary expansion conditions of a heating steam temperature of 107°C and a heating time of 120 seconds, and dividing the apparent density ($g/cm^3$) of the expanded beads before secondary expansion by the apparent density ($g/cm^3$) of the expanded beads after secondary expansion. From the results shown in FIG. 10, the expanded beads having specific dimples of the present invention have a secondary expansion ratio obtained under the conditions of a heating steam temperature of 107°C and a heating time of 120 seconds, which satisfies the following expression (1):

$$\text{Secondary expansion ratio} \leq -7.00 \times \{\text{apparent density } (g/cm^3)$$
$$\text{of expanded beads before secondary expansion}\} + 1.61$$
$$(\text{Expression 1})$$

In addition, the secondary expansion ratio of the expanded beads having specific dimples of the present invention preferably further satisfies the following the expression (4), and particularly preferably satisfies the following expression (5). The lower limit of the secondary expansion ratio is 1.1 from the viewpoint of obtaining an expanded-bead molded article having a satisfactory external appearance.

$$\text{Secondary expansion ratio} \leq -7.00 \times \{\text{apparent density } (g/cm^3)$$
$$\text{of expanded beads before secondary expansion}\} + 1.58$$
$$(\text{Expression 4})$$

$$\text{Secondary expansion ratio} \leq -7.00 \times \{\text{apparent density (g/cm}^3\text{)}$$
$$\text{of expanded beads before secondary expansion}\} + 1.56$$
$$\text{(Expression5)}$$

In order to obtain an expanded bead molded article from the expanded beads of the present invention, a so-called in-mold molding method may be employed, in which expanded styrene resin beads are charged into a mold such as a metal mold, the expanded beads in the mold are heated to be fusion bonded with one another, and the resultant product is removed from the mold after cooling. The present invention can be dramatically shorten the cooling time upon in-mold molding, by using the expanded beads of the present invention in this in-mold molding process. This benefit can be definitely enjoyed even in the case of obtaining an expanded-bead molded article having a small thickness (a thickness of 1 cm to less than 15 cm), but it becomes much more advantageous in the case of obtaining an expanded-bead molded article having a large thickness, for example, a thickness (has the same meaning as the gap between the moving mold and the fixed mold upon closing of the molding mold) of 10 cm or greater, by using a mold having a large gap between the moving mold and the fixed mold upon closing of the molding mold.

As the expanded-bead molded article that is obtainable by using the expanded beads of the present invention, a large-size molded article having a density of 0.008 to 0.1 g/cm$^3$, more preferably 0.01 to 0.05 g/cm$^3$, and particularly preferably 0.012 to 0.02 g/cm$^3$, and a thickness of greater than 10 cm, more preferably 15 to 100 cm, and particularly preferably 20 to 100 cm, is suitable. Examples of the large-size expanded-bead molded article include polystyrene expanded-bead molded articles having a size of 2 m or 1 m in length, 1 m in width and 50 cm in thickness, which are used for EPS construction methods; polystyrene expanded-bead molded articles having size of 1.2 m in length, 0.4 m in width and 10 to 20 cm in thickness, which are used as void slabs; and the like. In the present invention, even if such a large-size expanded-bead molded article is produced with enhanced fusion bonding down to the expanded beads in the central part of the molded article, the cooling time in the later stages of the in-mold molding process ends in short amount time. Furthermore, the density of the expanded-bead molded article can be determined by dividing the weight of the expanded-bead molded article by the volume of the molded article.

EXAMPLES

Hereinafter, Examples and Comparative Examples according to the present invention will be described.

Example 1

In an autoclave equipped with a stirring device and having an internal capacity of 3 liters, 700 g of deionized water, 0.78 g of tricalcium phosphate (manufactured by Taihei Chemical Industrial Co., Ltd.) as a suspending agent, 8.4 g of a 1% aqueous solution of disodium dodecyl diphenyl ether sulfonate (Pelex SS-H manufactured by Kao Corp.) as a surfactant, 2.5 g of a 0.01% aqueous solution of potassium persulfate as an auxiliary suspending agent, and 1.1 g of sodium acetate as an electrolyte were introduced.

Subsequently, 1.4 g of benzoyl peroxide (Niper BW manufactured by Nippon Oil & Fats Co., Ltd., water-diluted powder product) and 0.275 g of t-butyl peroxy-2-ethylhexylmonocarbonate (Perbutyl E manufactured by Nippon Oil & Fats Co., Ltd.) as polymerization initiators, and 5 g of liquid paraffin (Moresco White P150 manufactured by Matsumura Oil Research Corp., average carbon number 27) as a plasticizer were dissolved in 500 g of styrene as a monomer, and the solution was introduced into an autoclave while being stirred at 400 rpm. The autoclave was purged with nitrogen, and then a temperature increase was initiated. The temperature was raised to 90°C over a period of one hour and 30 minutes.

After the temperature inside the autoclave reached 90°C, the temperature was raised to 95°C over a period of 6 hours, and the temperature was further raised to 120°C over a period of 2 hours. The temperature was maintained unchanged at 120°C for 5 hours, and then the autoclave was cooled to 30°C over a period of about 6 hours. In addition, after a lapse of 6 hours from the time point when the temperature inside the autoclave reached 90°C (polymerization conversion ratio 81%), 115 g of butane (mixture of about 70% of normal butane and about 30% of isobutane) was added as a foaming agent into the autoclave over a period of about 20 minutes. After the addition of foaming agent, the stirring speed was reduced to 350 rpm.

After cooling, the content was taken out, and nitric acid was added to dissolve and remove the tricalcium phosphate adhered to the surface of the expandable styrene resin beads. The content was dehydrated in a centrifuge to thereby wash the expandable styrene resin beads, and the moisture adhered to the surface was removed with an air stream dryer. Thus, expandable styrene resin beads having an average bead diameter of about 1. 0 mm were obtained. A microscopic photograph of the cross-sectional surface layer of the resulting resin bead is presented in FIG. 11.

The obtained expandable styrene resin beads were screened with a sieve to sort out beads having a diameter of 0.7 to 1.4 mm. 0.006 parts by weight of N,N-bis(2-hydroxyethyl)alkylamine was added as an antistatic agent, and the beads were coated with a mixture of 0.12 parts by weight of zinc stearate, 0.04 parts by weight of glycerin monostearate, 0.025 parts by weight of glycerin and 0.025 parts by weight of methylphenylpolysiloxane, relative to 100 parts by weight of expandable styrene resin beads.

The obtained expandable styrene resin beads were introduced into a foaming machine of ordinary pressure batch type having an internal capacity of 30 liters, and steam was supplied therein to heat the expandable resin beads. The expandable resin beads were expanded to a bulk density of 16.6 kg/m$^3$, and thus expanded styrene resin beads were obtained. A microscopic photograph of the surface of the resulting expanded beads is presented in FIG. 3.

The obtained expanded beads were aged for one day at room temperature, and then a cylinder-shaped expanded-bead molded article having a diameter of 300 mm and a thickness of 180 mm was molded with a shape molding machine (manufactured by Erlenbach GmbH). This in-mold molding was carried out by heating for 20 seconds at a steam pressure of 0.07 MPa, subsequently water-cooling for 5 seconds, further performing vacuum cooling at a degree of vacuum of -0.08 MPa , opening the mold when the surface pressure meter reached 0.00 MPa (gauge pressure), and thereby releasing the molded article from the mold.

The obtained molded article was dried for one day at 40°C, and then was further cured for one day or longer at room temperature. Only then, the molded article was used in various evaluations. The time taken from the initiation of vacuum cooling to the release from the mold was recorded as the cooling time.

Content of foaming agent in expandable styrene resin beads

This content was determined by dissolving the obtained expandable styrene resin beads in dimethylformamide, measuring the content of the added foaming agent component by gas chromatography, and adding up the respective contents (weight%) of the components.

Molecular weight of styrene resin

The obtained expandable styrene resin beads were dissolved in tetrahydrofuran, and the measurement results obtained by gel permeation chromatography (GPC) were calibrated with polystyrene standards. Thus, the number average, weight average and Z average molecular weights were determined.

Bulk density of expanded beads

A 1-liter mess cylinder was provided, and the expanded beads were charged into the mess cylinder up to the 1-liter marker line. The weight (g) of the charged expanded beads was weighed to 0.1 g. The bulk density (kg/m$^3$) of the expanded beads was determined by the following expression based on the obtained weight WP (g) of the expanded beads per liter.

```
Bulk density (kg/m³) of expanded beads = {WP (g) × 0.001

(kg/g)}/{1 (L) × 0.001 (L/m³)}
```

Cooling time upon molding

The time (seconds) required from the initiation of depressurization of the mold cavity after steam heating and water-cooling, to the time point for the surface pressure of the mold cavity to reach 0.00 MPa (gauge pressure), was measured.

Internal fusion bonding ratio of molded article

The obtained expanded-bead molded article was sliced with a nichrome wire into three sheets of plates each measuring 60 mm in the thickness direction. The second plate as counted from the surface side was halved, and the fracture surface was observed. With respect to 100 or more expanded beads, the number of expanded beads that were fractured and the number of expanded beads that were detached at the interface were respectively measured by visual inspection, and the proportion of the fractured expanded beads with respect to the total number of the fractured expanded beads and the expanded beads that were detached at the interface, was designated as the internal fusion bonding ratio

(%).

Flexural strength

A three-point bending test was carried out according to JIS K 7221. That is, expanded beads of a styrene resin (bulk density being 16.6 kg/m$^3$) were aged for one day at room temperature, and then molding was conducted using a molding machine (VS-500 manufactured by Daisen Industrial Co., Ltd.). The mold dimension was 300 × 75 × 25 mm, and the three-point bending test (span 200 mm) was carried out to measure the maximum flexural stress (MPa). The same test was carried out for 5 specimens, and the results were averaged to thereby determine the flexural strength (MPa).

Example 2

The production was carried out in the same manner as in Example 1, except that 5 g of liquid paraffin (Moresco White P350P manufactured by Matsumura Oil Research Corp., average carbon number 33) was used as the plasticizer (dimple forming agent). A microscopic photograph of the cross-sectional surface layer of the obtained expandable resin beads is presented in FIG. 12. Furthermore, a microscopic photograph of the surface of the resulting expanded beads is presented in FIG. 5.

Example 3

The production was carried out in the same manner as in Example 1, except that 4 g of liquid paraffin (Moresco White P150 manufactured by Matsumura Oil Research Corp., average carbon number 27) and 1 g of glycerin tristearate (extremely hardened beef tallow manufactured by Nippon Oil & Fats Co., Ltd.) were used as the plasticizer(dimple forming agent). A microscopic photograph of the surface of the resulting expanded beads is presented in FIG. 6.

Example 4

The production was carried out in the same manner as in Example 1, except that 115 g of butane (mixture of about 70% of normal butane and about 30% of isobutane) was added as the foaming agent, into the autoclave over a period of about 20 minutes after a lapse of 5 hours (polymerization conversion ratio 64%) from the time point when the temperature in the autoclave reached 90°C.

Example 5

The production was carried out in the same manner as in Example 1, except that 115 g of butane (mixture of about 70% of normal butane and about 30% of isobutane) was added as the foaming agent, into the autoclave over a period of about 20 minutes after a lapse of 7 hours and 30 minutes (polymerization conversion ratio 93%) from the time point when the temperature in the autoclave reached 90°C.

Example 6

The production was carried out in the same manner as in Example 1, except that 2.5 g of liquid paraffin (Moresco White P150 manufactured by Matsumura Oil Research Corp., average carbon number 27) was used as the plasticizer (dimple forming agent).

Example 7

The production was carried out in the same manner as in Example 1, except that 12.5 g of liquid paraffin (Moresco White P150 manufactured by Matsumura Oil Research Corp., average carbon number 27) was used as the plasticizer (dimple forming agent).

Example 8

The production was carried out in the same manner as in Example 1, except that 105 g of butane (mixture of about 70% of normal butane and about 30% of isobutane) was used as a foaming agent.

Example 9

The production was carried out in the same manner as in Example 1, except that 90 g of butane (mixture of about 70% of normal butane and about 30% of isobutane) was used as a foaming agent.

Example 10

The production was carried out in the same manner as in Example 1, except that 75 g of butane (mixture of about 70% of normal butane and about 30% of isobutane) was used as a foaming agent.

Example 11

The production was carried out in the same manner as in Example 1, except that 400 g of styrene and 100 g of methyl methacrylate were used as monomers, 5 g of liquid paraffin (Moresco White P60 manufactured by Matsumura Oil Research Corp., average carbon number 20) was used as a plasticizer (dimple forming agent), and 115 g of butane (mixture of about 70% of normal butane and about 30% of isobutane) was added as the foaming agent, into the autoclave over a period of about 20 minutes after a lapse of 3 hours and 30 minutes (polymerization conversion ratio 81%) from the time point when the temperature in the autoclave reached 90°C.

Example 12

The production was carried out in the same manner as in Example 1, except that 350 g of styrene and 150 g of methyl methacrylate were used as monomers, 5 g of glycerin tristearate (manufactured by Nippon Oil & Fats Co., Ltd.; extremely hardened beef tallow) was used as a plasticizer (dimple forming agent), and 115 g of butane (mixture of about 70% of normal butane and about 30% of isobutane) was added as the foaming agent, into the autoclave over a period of about 20 minutes after a lapse of 3 hours and 30 minutes (polymerization conversion ratio 83%) from the time point when the temperature in the autoclave reached 90°C.

Example 13

The production was carried out in the same manner as in Example 1, except that 275 g of styrene and 225 g of methyl methacrylate were used as monomers, 5 g of an α-olefin mixture formed from a mixture of compounds having carbon numbers of 20 to 28 (manufactured by Mitsubishi Chemical Corp.; trade name "Dialen 208") was used as a plasticizer (dimple forming agent), and 115 g of butane (mixture of about 70% of normal butane and about 30% of isobutane) was added as the foaming agent, into the autoclave over a period of about 20 minutes after a lapse of 3 hours (polymerization conversion ratio 80%) from the time point when the temperature in the autoclave reached 90°C.

Example 14

In an autoclave equipped with a stirring device and having an internal capacity of 3 liters, 700 g of deionized water, 0.78 g of tricalcium phosphate (manufactured by Taihei Chemical Industrial Co., Ltd.) as a suspending agent, 8.4 g of a 1% aqueous solution of disodium dodecyl diphenyl ether sulfonate (Pelex SS-H manufactured by Kao Corp.) as a surfactant, and 1.1 g of sodium acetate as an electrolyte were introduced.
Subsequently, 1.4 g of benzoyl peroxide (Niper BW manufactured by Nippon Oil & Fats Co., Ltd., water-diluted powder product) and 0.275 g of t-butyl peroxy-2-ethylhexylmonocarbonate (Perbutyl E manufactured by Nippon Oil & Fats Co., Ltd.) as polymerization initiators, 5 g of liquid paraffin (Moresco White P150 manufactured by Matsumura Oil Research Corp., average carbon number 27) as a plasticizer, 3 g of 1,2,5,6,9,10-hexabromocyclododecane as a flame retardant, and 1.5 g of dicumyl peroxide as an auxiliary flame retardant were dissolved in 500 g of styrene as a monomer, and the solution was introduced into an autoclave while being stirred at 400 rpm. The autoclave was purged with nitrogen, and then a temperature increase was initiated. The temperature was raised to 90°C over a period of one hour and 30 minutes.
After the temperature reached 90°C, the temperature was raised to 95°C over a period of 6 hours, and the temperature was further raised to 120°C over a period of 2 hours. The temperature was maintained unchanged at 120°C for 5 hours, and then the autoclave was cooled to 30°C over a period of about 6 hours. After a lapse of 6 hours from the time point when the temperature inside the autoclave reached 90°C (polymerization conversion ratio 79%), 75 g of butane (mixture of about 70% of normal butane and about 30% of isobutane) was added as a foaming agent into the autoclave over a period of about 20 minutes. After the addition of foaming agent, the stirring speed was reduced to 350 rpm. After cooling, the content was taken out, and nitric acid was added to dissolve and remove the tricalcium phosphate adhered to the surface of the expandable styrene resin beads. The content was dehydrated in a centrifuge to thereby wash the expandable styrene resin beads, and the moisture adhered to the surface was removed with an air stream dryer. Thus, expandable styrene resin beads having an average bead diameter of about 1.0 mm were obtained.

The obtained expandable styrene resin beads were screened with a sieve to sort out beads having a diameter of 0.7 to 1.4 mm. 0.006 parts by weight of N,N-bis(2-hydroxyethyl)alkylamine was added as an antistatic agent, and the beads were coated with a mixture of 0.12 parts by weight of zinc stearate, 0.04 parts by weight of glycerin monostearate and 0.025 parts by weight of glycerin, relative to 100 parts by weight of expandable styrene resin beads.

The obtained expandable styrene resin beads were introduced into a foaming machine of ordinary pressure batch type having an internal capacity of 30 liters, and steam was supplied therein to heat the expandable resin beads. The expandable resin beads were expanded to a bulk density of 14.9 kg/m$^3$, and thus expanded styrene resin beads were obtained. The obtained expanded beads were aged for one day at room temperature, and then a cylinder-shaped expanded-bead molded article having a diameter of 300 mm and a thickness of 180 mm was molded with a shape molding machine (manufactured by Erlenbach GmbH). The molding conditions included heating for 20 seconds at a predetermined pressure, for example, at a steam pressure of 0.07 MPa, subsequently water-cooling for 5 seconds, further performing vacuum cooling at a degree of vacuum of -0.08 MPa , opening the mold when the surface pressure meter reached 0. 00 MPa (gauge pressure), and thereby releasing the molded article from the mold.

The obtained molded article was dried for one day at 40°C, and then was further cured for one day or longer at room temperature. Only then, the molded article was used in various evaluations. The time taken from the initiation of vacuum cooling to the release from the mold was recorded as the cooling time.

Example 15

The production was carried out in the same manner as in Example 1, except that the expandable styrene resin beads obtained in Example 14 were introduced into a foaming machine of ordinary pressure batch type having an internal capacity of 30 liters, steam was supplied therein to heat the expandable resin beads, the expandable resin beads were expanded to a bulk density of 20.0 kg/m$^3$, and thus expanded styrene resin beads were obtained.

Example 16

The production was carried out in the same manner as in Example 1, except that the expandable styrene resin beads obtained in Example 14 were introduced into a foaming machine of ordinary pressure batch type having an internal capacity of 30 liters, steam was supplied therein to heat the expandable resin beads, the expandable resin beads were expanded to a bulk density of 27.0 kg/m$^3$, and thus expanded styrene resin beads were obtained.

Comparative Example 1

In an autoclave equipped with a stirring device and having an internal capacity of 3 liters, 800 g of deionized water, 0.68 g of tricalcium phosphate (manufactured by Taihei Chemical Industrial Co., Ltd.) as a suspending agent, 0.025 g of sodium dodecyl benzene sulfonate (manufactured by Tokyo Chemical Industry Co., Ltd.), and 1.2 g of sodium acetate as an electrolyte were introduced.

Subsequently, 2.2 g of t-butyl peroxy-2-ethylhexanoate (Perbutyl O manufactured by Nippon Oil & Fats Co., Ltd.) and 1.2 g of t-butyl peroxy-2-ethylhexylmonocarbonate (Perbutyl E manufactured by Nippon Oil & Fats Co., Ltd.) as polymerization initiators, and 7.55 g of di-2-ethylhexyl phthalate as a plasticizer were dissolved in 755 g of styrene, and the solution was introduced into an autoclave while being stirred at 400 rpm. The autoclave was purged with nitrogen, and then a temperature increase was initiated. The temperature was raised to 90°C over a period of one hour and 30 minutes. In the middle of raising the temperature to 90°C, 2.5 g of a 0.01% aqueous solution of potassium persulfate was added as an auxiliary suspending agent when the temperature reached 60°C.

After the temperature reached 90°C, the temperature was raised to 100°C over a period of 5 hours, and the temperature was further raised to 112°C over a period of one hour and 30 minutes. The temperature was maintained unchanged at 112°C for 4 hours, and then the autoclave was cooled to 30°C over a period of about 6 hours. After a lapse of 4 hours and 45 minutes from the time point when the temperature inside the autoclave reached 90°C (polymerization conversion ratio 84%), 54.4 g of isobutane (mixture of about 20% of normal butane and about 80% of isobutane) and 28.7 g of pentane (mixture of about 80% of normal pentane and about 20% of isopentane) were added as foaming agents into the autoclave over a period of about 30 minutes. After the addition of foaming agents, the process was carried out in the same manner as in Example 1, except that resin beads were obtained by reducing the stirring speed to 350 rpm. A microscopic photograph of the surface of the resulting expanded beads is presented in FIG. 4.

Comparative Example 2

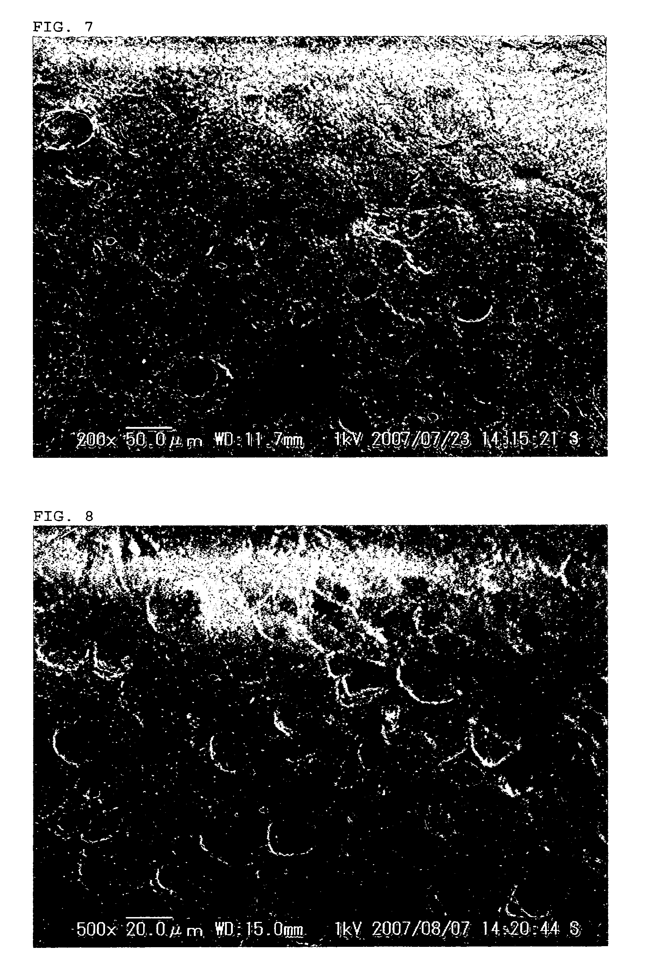

The production was carried out in the same manner as in Example 1, except that 115 g of butane (mixture of about 70% of normal butane and about 30% of isobutane) was added as a foaming agent into the autoclave over a period of about 20 minutes, after a lapse of 4 hours from the time point when the temperature inside the autoclave reached 90°C (polymerization conversion ratio 57%). A microscopic photograph of the surface of the resulting expanded beads is presented in FIG. 7.

Comparative Example 3

The production was carried out in the same manner as in Example 1, except that 115 g of butane (mixture of about 70% of normal butane and about 30% of isobutane) was added as a foaming agent into the autoclave over a period of about 20 minutes, after a lapse of 8 hours from the time point when the temperature inside the autoclave reached 90°C (polymerization conversion ratio 98%).

Comparative Example 4

The production was carried out in the same manner as in Example 1, except that 17.5 g of liquid paraffin (Moresco White P150 manufactured by Matsumura Oil Research Corp., average carbon number 27) was used as a plasticizer. The obtained resin beads were coalesced to form beads larger than 2 mm in size (clusters formed by adhesion of plural beads).

Comparative Example 5

The production was carried out in the same manner as in Example 1, except that 5 g of butyl stearate was used as a plasticizer.

Comparative Example 6

The production was carried out in the same manner as in Example 1, except that no plasticizer was used.

Comparative Example 7

In an autoclave equipped with a stirring device and having an internal capacity of 3 liters, 760 g of deionized water, 0.76 g of tricalcium phosphate (manufactured by Taihei Chemical Industrial Co., Ltd.) as a suspending agent, 0.05 g of sodium dodecyl benzene sulfonate (manufactured by Tokyo Chemical Industry Co., Ltd.), and 1.2 g of sodium acetate as an electrolyte were introduced.
Subsequently, 1.91 g of benzoyl peroxide (Niper BW manufactured by Nippon Oil & Fats Co., Ltd., water-diluted powder product) and 0.93 g of t-butyl peroxy-2-ethylhexylmonocarbonate (Perbutyl E manufactured by Nippon Oil & Fats Co., Ltd.) as polymerization initiators, 7.6 g of glycerin tristearate (manufactured by Nippon Oil & Fats Co., Ltd.; extremely hardened beef tallow) as a plasticizer, 4.56 g of 1,2,5,6,9,10-hexabromocyclododecane as a flame retardant, and 2.28 g of dicumyl peroxide as an auxiliary flame retardant were dissolved in 760 g of styrene as a monomer, and the solution was introduced into an autoclave while being stirred at 400 rpm. The autoclave was purged with nitrogen, and then a temperature increase was initiated. The temperature was raised to 90°C over a period of one hour and 30 minutes. After the temperature reached 90°C, the temperature was raised to 100°C over a period of 6 hours and 30 minutes, and the temperature was further raised to 120°C over a period of one hour and 30 minutes. The temperature was maintained unchanged at 120°C for 2 hours and 30 minutes, and then the autoclave was cooled to 30°C over a period of about 6 hours. After a lapse of 5 hours and 30 minutes from the time point when the temperature inside the autoclave reached 90°C (polymerization conversion ratio 76%), 57 g of isobutane (mixture of about 20% of normal butane and about 80% of isobutane) and 19 g of pentane (mixture of about 80% of normal pentane and about 20% of isopentane) were added as foaming agents into the autoclave over a period of about 30 minutes. After the addition of foaming agents, the process was carried out in the same manner as in Example 1, except that the resin beads were obtained by reducing the stirring speed to 350 rpm.
After cooling, the content was taken out, and nitric acid was added to dissolve and remove the tricalcium phosphate adhered to the surface of the expandable styrene resin beads. The content was dehydrated in a centrifuge to thereby wash the expandable styrene resin beads, and the moisture adhered to the surface was removed with an air stream dryer. Thus, expandable styrene resin beads having an average bead diameter of about 1.0 mm were obtained. The obtained expandable styrene resin beads were screened with a sieve to sort out beads having a diameter of 0.7 to 1.4 mm. 0.006 parts by weight of N,N-bis(2-hydroxyethyl)alkylamine was added as an antistatic agent, and the beads were coated with a mixture of 0.12 parts by weight of zinc stearate, 0.04 parts by weight of glycerin monostearate and 0.025 parts by weight of glycerin, relative to 100 parts by weight of expandable styrene resin beads.

The obtained expandable styrene resin beads were introduced into a foaming machine of ordinary pressure batch type having an internal capacity of 30 liters, and steam was supplied therein to heat the expandable resin beads. The expandable resin beads were expanded to a bulk density of 15.0 kg/m³, and thus expanded styrene resin beads were obtained. The obtained expanded beads were aged for one day at room temperature, and then a cylinder-shaped expanded-bead molded article having a diameter of 300 mm and a thickness of 180 mm was molded with a shape molding machine (manufactured by Erlenbach GmbH). The molding conditions included heating for 20 seconds at a predetermined pressure, for example, at a steam pressure of 0.07 MPa, subsequently water-cooling for 5 seconds, further performing vacuum cooling at a degree of vacuum of -0.08 MPa , opening the mold when the surface pressure meter reached 0. 00 MPa (gauge pressure), and thereby releasing the molded article from the mold.

The obtained molded article was dried for one day at 40°C, and then was further cured for one day or longer at room temperature. Only then, the molded article was used in various evaluations. The time taken from the initiation of vacuum cooling to the release from the mold was recorded as the cooling time.

Comparative Example 8

The production was carried out in the same manner as in Example 1, except that the expandable styrene resin beads obtained in Comparative Example 7 were introduced into a foaming machine of ordinary pressure batch type having an internal capacity of 30 liters, steam was supplied therein to heat the expandable resin beads, the expandable resin beads were expanded to a bulk density of 19.9 kg/m³, and thus expanded styrene resin beads were obtained. A microscopic photograph of the surface of the resulting expanded beads is presented in FIG. 8.

Comparative Example 9

The production was carried out in the same manner as in Example 1, except that the expandable styrene resin beads obtained in Comparative Example 7 introduced into a foaming machine of ordinary pressure batch type having an internal capacity of 30 liters, steam was supplied therein to heat the expandable resin beads, the expandable resin beads were expanded to a bulk density of 27. 2 kg/m³, and thus expanded styrene resin beads were obtained.

The amount of addition of the plasticizer (dimple forming agent), the polymerization conversion ratio upon the addition of foaming agent, the content of the foaming agent in the expandable styrene resin beads, the molecular weight of the styrene resin, the bulk density of the expanded beads, the proportion of mesh pattern on the surface of the expanded beads, the size of mesh, the cell size of the expanded beads, the cooling time upon molding, the internal fusion bonding of the molded article, flexural strength and the like as used in the respective Examples and Comparative Examples given above, are presented in Tables 1 to 8. In addition, the number of voids in the surface layer of the expandable resin beads as indicated in the tables represents the number of voids (voids/100 $\mu$m²) having a diameter in the range of 2 to 6 $\mu$m that are present in the surface layer having a thickness in the range of 50 $\mu$m from the surface of the resin beads; the number of dimples at the surface of the expandable resin beads is the number of dimples (dimples/ 100 $\mu$m²) having a diameter in the range of 0.1 to 5 $\mu$m that are present at the surface of the expandable resin beads; and the number of dimples at the surface of the expanded beads is the number of dimples (dimples/$\mu$m²) having a maximum diameter of 5 to 100 $\mu$m that are present at the surface of the expanded beads.

[Table 1]

| | Example 1 | Example 2 | Example 3 |
|---|---|---|---|
| Monomer composition | St 100% | St 100% | St 100% |
| Polymerization conversion ratio upon addition of foaming agent (%) | 81% | 80% | 82% |
| Plasticizer | Liquid paraffin (carbon number 27) | Liquid paraffin (carbon number 33) | Liquid paraffin (carbon number 27)/GTS |

(continued)

|  | Example 1 | Example 2 | Example 3 |
|---|---|---|---|
| Amount of addition of plasticizer (weight%) | 1.0 | 1.0 | 0.8/0.2 |
| Content of foaming agent (weight%) | 9.5 | 9.2 | 9.3 |
| Number of voids in surface layer of expandable resin beads (voids/100 $\mu m^2$) | 0.32 | 0.16 | 0.08 |
| Number of dimples at surface of expandable resin beads (dimples/100 $\mu m^2$) | 17.6 | 10.6 | 7.6 |
| Number average molecular weight | 67000 | 60000 | 67000 |
| Weight average molecular weight | 279000 | 259000 | 274000 |
| Z average molecular weight | 658000 | 592000 | 649000 |
| Bulk density of expanded beads (kg/m$^3$) | 16.6 | 16.0 | 16.3 |
| Apparent density of expanded beads: X (g/cm$^3$) | 0.027 | 0.026 | 0.026 |
| Secondary expansion ratio of expanded beads | 1.36 | 1.36 | 1.41 |
| -7.00X+1.61 | 1.42 | 1.43 | 1.43 |

(continued)

| | Example 1 | | | Example 2 | | | Example 3 | | |
|---|---|---|---|---|---|---|---|---|---|
| Number of dimples at surface of expanded beads (dimples/$\mu$m$^2$) | 0.037 | | | 0.014 | | | 0.007 | | |
| Total areal ratio of dimples at surface of expanded beads (%) | 93% | | | 52% | | | 22% | | |
| Average diameter of dimples at surface of expanded beads ($\mu$m) | 26.1 | | | 15.8 | | | 31.8 | | |
| Average bead diameter of expanded beads (mm) | 3.3 | | | 3.6 | | | 3.2 | | |
| Cell size of expanded beads ($\mu$m) | 43 | | | 38 | | | 97 | | |
| Molding heating pressure (MPa (G)) | 0.06 | 0.07 | 0.08 | 0.06 | 0.07 | 0.08 | 0.06 | 0.07 | 0.08 |
| Cooling time upon molding (minutes) | 1.1 | 2.3 | 2.5 | 0.5 | 2.7 | 3.8 | 2.6 | 6.8 | 8.8 |
| Density of expanded-bead molded article (kg/m$^3$) | 17.8 | 17.7 | 17.8 | 17.1 | 17.2 | 17.0 | 17.3 | 17.5 | 17.4 |
| Internal fusion bonding ratio (%) | 10 | 75 | 80 | 25 | 55 | 70 | 35 | 60 | 75 |
| In the table, St: styrene, GTS: glycerin tristearate | | | | | | | | | |

[Table 2]

| | Example 4 | Example 5 | Example 6 | Example 7 |
|---|---|---|---|---|
| Monomer composition | St 100% | St 100% | St 100% | St 100% |

(continued)

|  | Example 4 | Example 5 | Example 6 | Example 7 |
|---|---|---|---|---|
| Polymerization conversion ratio upon addition of foaming agent (%) | 64% | 93% | 83% | 81% |
| Plasticizer | Liquid paraffin number 27) (carbon | Liquid paraffin number 27) (carbon | Liquid paraffin number 27) (carbon | Liquid paraffin number 27) (carbon |
| Amount of addition of plasticizer (weight%) | 1.0 | 1.0 | 0.5 | 2.5 |
| Content of foaming agent (weight%) | 9.8 | 9.3 | 9.4 | 9.8 |
| Number average molecular weight | 72000 | 66000 | 69000 | 72000 |
| Weight average molecular weight | 245000 | 285000 | 261000 | 234000 |
| Z average molecular weight | 556000 | 675000 | 597000 | 514000 |
| Number of voids in surface layer of $\mu m^2$) expandable resin beads (voids/100 $\mu m^2$) | 0.13 | 0.27 | 0.21 | 0.33 |
| Number of dimples at surface of expandable resin beads (dimples/100 $\mu m^2$) | 49.0 | 13.8 | 9.7 | 17.8 |
| Bulk density of expanded beads (kg/m$^3$) | 16.5 | 16.6 | 16.4 | 16.3 |
| Apparent density of expanded beads: X (g/cm$^3$) | 0.027 | 0.027 | 0.026 | 0.026 |

(continued)

| | Example 4 | | | Example 5 | | | Example 6 | | | Example 7 | | |
|---|---|---|---|---|---|---|---|---|---|---|---|---|
| Secondary expansion ratio of expanded beads | 1.40 | | | 1.35 | | | 1.37 | | | 1.36 | | |
| -7.00X+1.61 | 1.42 | | | 1.42 | | | 1.43 | | | 1.43 | | |
| Number of dimples at surface of expanded beads (dimples/$\mu$m$^2$) | 0.008 | | | 0.024 | | | 0.016 | | | 0.025 | | |
| Total areal ratio of dimples at surface of expanded beads (%) | 27% | | | 65% | | | 45% | | | 76% | | |
| Average diameter of dimples at surface of expanded beads ($\mu$m) | 23.6 | | | 52.9 | | | 23.6 | | | 61.1 | | |
| Average bead diameter of expanded beads (mm) | 5.1 | | | 2.6 | | | 3.0 | | | 3.3 | | |
| Cell size of expanded beads ($\mu$m) | 95 | | | 38 | | | 90 | | | 145 | | |
| Molding heating pressure (MPa (G)) | - | - | - | 0.06 | 0.07 | 0.08 | - | - | - | - | - | - |
| Cooling time upon molding (minutes) | - | - | - | 1.3 | 2.4 | 2.3 | - | - | - | - | - | - |
| Density of expanded-bead molded article (kg/m$^3$) | - | - | - | 17.8 | 17.8 | 17.7 | 17.3 | 17.4 | 17.4 | 17.4 | 17.3 | 17.4 |
| Internal fusion bonding ratio (%) | - | - | - | 25 | 70 | 90 | - | - | - | - | - | - |

(continued)

| | Example 4 | | | Example 5 | | | Example 6 | | | Example 7 | | |
|---|---|---|---|---|---|---|---|---|---|---|---|---|
| Flexural strength of expanded-bead molded article (MPa) | - | - | - | - | - | 0.26 | - | - | - | - | - | - |

| In the table, St: styrene |
|---|

[Table 3]

| | Example 8 | Example 9 | Example 10 |
|---|---|---|---|
| Monomer composition | St 100% | St 100% | St 100% |
| Polymerization conversion ratio upon addition of foaming agent (%) | 82% | 81% | 80% |
| Plasticizer | Liquid paraffin number (carbon 27) | Liquid paraffin number 27) (carbon | Liquid paraffin number 27) (carbon |
| Amount of addition of plasticizer (weight%) | 1.0 | 1.0 | 1.0 |
| Content of foaming agent (weight%) | 9.2 | 8.4 | 7.3 |
| Number of voids in surface layer of expandable resin beads (voids/100 $\mu m^2$) | 0.43 | 0.24 | 0.20 |
| Number of dimples at surface of expandable resin beads (dimples/100 $\mu m^2$) | 12.4 | 10.4 | 7.6 |
| Number average molecular weight | 70000 | 77000 | 89000 |

(continued)

| | Example 8 | | | Example 9 | | | Example 10 | | |
|---|---|---|---|---|---|---|---|---|---|
| Weight average molecular weight | 278000 | | | 270000 | | | 256000 | | |
| Z average molecular weight | 655000 | | | 629000 | | | 585000 | | |
| Bulk density of expanded beads (kg/m$^3$) | 16.5 | | | 16.6 | | | 16.5 | | |
| Apparent density of expanded beads: X (g/cm$^3$) | 0.027 | | | 0.027 | | | 0.027 | | |
| Secondary expansion ratio of expanded beads | 1.36 | | | 1.38 | | | 1.39 | | |
| -7.00X+1.61 | 1.42 | | | 1.42 | | | 1.42 | | |
| Number of dimples at surface of expanded beads (dimples/$\mu$m$^2$) | 0.032 | | | 0.017 | | | 0.013 | | |
| Total areal ratio of dimples at surface of expanded beads (%) | 86% | | | 48% | | | 38% | | |
| Average diameter of dimples at surface of expanded beads ($\mu$m) | 30.8 | | | 31.5 | | | 27.6 | | |
| Average bead diameter of expanded beads (mm) | 3.3 | | | 3.2 | | | 3.3 | | |
| Cell size of expanded beads ($\mu$m) | 44 | | | 42 | | | 41 | | |
| Molding heating pressure (MPa (G)) | 0.06 | 0.07 | 0.08 | 0.06 | 0.07 | 0.08 | 0.06 | 0.07 | 0.08 |

(continued)

|  | Example 8 | | | Example 9 | | | Example 10 | | |
|---|---|---|---|---|---|---|---|---|---|
| Cooling time upon molding (minutes) | 1.1 | 2.2 | 2.4 | 0.7 | 2.1 | 2.0 | 0.4 | 1.3 | 1.4 |
| Density of expanded-bead molded article (kg/m$^3$) | 17.5 | 17.6 | 17.5 | 17.8 | 17.8 | 17.8 | 17.7 | 17.5 | 17.6 |
| Internal fusion bonding ratio (%) | 10 | 70 | 75 | 15 | 50 | 75 | 10 | 60 | 70 |
| Flexural strength of expanded-bead molded article (MPa) | - | - | 0.26 | - | - | 0.26 | - | - | 0.26 |
| In the table, St: styrene | | | | | | | | | |

[Table 4]

|  | Example 11 | Example 12 | Example 13 |
|---|---|---|---|
| Monomer composition | St 80% / MMA 20% | St 70% / MMA 30% | St 55% / MMA 45% |
| Polymerization conversion ratio upon addition of foaming agent (%) | 81% | 83% | 80% |
| Plasticizer | Liquid paraffin (carbon number 20) | GTS | α-olefin |
| Amount of addition of plasticizer (weight%) | 1.0 | 1.0 | 1.0 |
| Content of foaming agent (weight%) | 8.9 | 9.8 | 9.6 |
| Number of voids in surface layer of expandable resin beads (voids/100 $\mu$m$^2$) | 0.31 | 0.48 | 0.37 |
| Number of dimples at surface of expandable resin beads (dimples/100 $\mu$m$^2$) | 23.1 | 29.6 | 24.3 |
| Number average molecular weight | 54000 | 63000 | 69000 |
| Weight average molecular weight | 201000 | 200000 | 208000 |
| Z average molecular weight | 407000 | 375000 | 399000 |
| Bulk density of expanded beads (kg/m$^3$) | 17.0 | 17.7 | 18.3 |
| Apparent density of expanded beads: X (g/cm$^3$) | 0.028 | 0.030 | 0.031 |

(continued)

| | Example 11 | | | Example 12 | | | Example 13 | | |
|---|---|---|---|---|---|---|---|---|---|
| Secondary expansion ratio of expanded beads | 1.34 | | | 1.36 | | | 1.35 | | |
| -7.00X+1.61 | 1.41 | | | 1.40 | | | 1.39 | | |
| Number of dimples at surface of expanded beads (dimples/$\mu$m$^2$) | 0.022 | | | 0.047 | | | 0.032 | | |
| Total areal ratio of dimples at surface of expanded beads (%) | 60% | | | 98% | | | 85% | | |
| Average diameter of dimples at surface of expanded beads ($\mu$m) | 39.7 | | | 23.8 | | | 40.9 | | |
| Average bead diameter of expanded beads (mm) | 3.0 | | | 3.1 | | | 3.3 | | |
| Cell size of expanded beads ($\mu$m) | 83 | | | 88 | | | 90 | | |
| Molding heating pressure (MPa(G)) | - | - | - | - | - | - | - | - | - |
| Cooling time upon molding (minutes) | - | - | - | - | - | - | - | - | - |
| Density of expanded-bead molded article (kg/m$^3$) | 18.2 | 18.0 | 18.1 | 18.8 | 19.0 | 18.8 | 19.5 | 19.6 | 19.6 |
| Internal fusion bonding ratio (%) | - | - | - | - | - | - | - | - | - |
| Flexural strength of expanded-bead molded article (MPa) | - | - | - | - | - | - | - | - | - |
| In the table, St: styrene, MMA: methyl methacrylate, GTS: glycerin tristearate | | | | | | | | | |

[Table 5]

| | Example 14 | Example 15 | Example 16 |
|---|---|---|---|
| Monomer composition | St 100% (containing flame retardant) | St 100% (containing flame retardant) | St 100% (containing flame retardant) |
| Polymerization conversion ratio upon addition of foaming agent (%) | 79% | 79% | 79% |
| Plasticizer | Liquid paraffin (carbon number 27) | Liquid paraffin (carbon number 27) | Liquid paraffin (carbon number 27) |
| Amount of addition of plasticizer (weight%) | 1.0 | 1.0 | 1.0 |

(continued)

| | Example 14 | Example 15 | Example 16 |
|---|---|---|---|
| Content of foaming agent (weight%) | 9.3 | 9.3 | 9.3 |
| Number of voids in surface layer of expandable resin beads (voids/100 $\mu m^2$) | 0.24 | 0.29 | 0.33 |
| Number of dimples at surface of expandable resin beads (dimples/100 $\mu m^2$) | 16.5 | 17.7 | 18.0 |
| Number average molecular weight | 66000 | 66000 | 66000 |
| Weight average molecular weight | 204000 | 204000 | 204000 |
| Z average molecular weight | 412000 | 412000 | 412000 |
| Bulk density of expanded beads (kg/m$^3$) | 14.9 | 20.0 | 27.0 |
| Apparent density of expanded beads: X (g/cm$^3$) | 0.024 | 0.032 | 0.044 |
| Secondary expansion ratio of expanded beads | 1.41 | 1.34 | 1.27 |
| -7.00X+1.61 | 1.44 | 1.39 | 1.30 |
| Number of dimples at surface of expanded beads (dimples/$\mu m^2$) | 0.017 | 0.021 | 0.023 |

(continued)

| | Example 14 | | | Example 15 | | | Example 16 | | |
|---|---|---|---|---|---|---|---|---|---|
| Total areal ratio of dimples at surface of expanded beads (%) | 47% | | | 58% | | | 63% | | |
| Average diameter of dimples at surface of expanded beads (μm) | 32.1 | | | 31.2 | | | 54.1 | | |
| Average bead diameter of expanded beads (mm) | 4.0 | | | 3.1 | | | 2.2 | | |
| Cell size of expanded beads (μm) | 108 | | | 80 | | | 85 | | |
| Molding heating pressure (MPa (G)) | 0.06 | 0.07 | 0.08 | 0.06 | 0.07 | 0.08 | 0.06 | 0.07 | 0.08 |
| Cooling time upon molding (minutes) | 1.0 | 1.9 | 1.7 | 2.9 | 4.1 | 3.9 | 8.9 | 8.8 | 7.1 |
| Density of expanded-bead molded article (kg/m$^3$) | 15.8 | 15.9 | 15.9 | 21.4 | 21.3 | 21.4 | 28.9 | 29.0 | 28.9 |
| Internal fusion bonding ratio (%) | 25 | 70 | 70 | 40 | 50 | 75 | 80 | 80 | 75 |
| Flexural strength of expanded-bead molded article (MPa) | - | 0.24 | - | - | - | 0.31 | - | 0.45 | - |
| In the table, St: styrene | | | | | | | | | |

[Table 6]

| | Comparative Example 1 | Comparative Example 2 | Comparative Example 3 | Comparative Example 4 |
|---|---|---|---|---|
| Monomer composition | St 100% | St 100% | St 100% | St 100% |

(continued)

| | Comparative Example 1 | Comparative Example 2 | Comparative Example 3 | Comparative Example 4 |
|---|---|---|---|---|
| Polymerization conversion ratio upon addition of foaming agent (%) | 84% | 57% | 98% | 81% |
| Plasticizer | DOP | Liquid paraffin (carbon number 27) | Liquid paraffin (carbon number 27) | Liquid paraffin (carbon number 27) |
| Amount of addition of plasticizer (weight%) | 1.0 | 1.0 | 1.0 | 3.5 |
| Content of foaming agent (weight%) | 5.5 | 9.2 | 9.3 | *2 |
| Number of voids in surface layer of expandable resin beads (voids/100 $\mu$m$^2$) | 0 | 0.03 | 0 | - |
| Number of dimples at surface of expandable resin beads (dimples/100 $\mu$m$^2$) | 0 | 3.9 | 1.1 | - |
| Number average molecular weight | 67000 | 61000 | 67000 | - |
| Weight average molecular weight | 226000 | 186000 | 286000 | - |
| Z average molecular weight | 507000 | 371000 | 673000 | - |
| Bulk density of expanded beads (kg/m$^3$) | 16.6 | 16.0 | 16.3 | - |
| Apparent density of expanded beads: X (g/cm$^3$) | 0.027 | 0.026 | 0.026 | - |

(continued)

| | Comparative Example 1 | | | Comparative Example 2 | | | Comparative Example 3 | | | Comparative Example 4 | | |
|---|---|---|---|---|---|---|---|---|---|---|---|---|
| Secondary expansion ratio of expanded beads | 1.55 | | | 1.54 | | | 1.55 | | | - | | |
| -7.00X+1.61 | 1.42 | | | 1.43 | | | 1.43 | | | - | | |
| Number of dimples at surface of expanded beads (dimples/$\mu$.m$^2$) | *1 | | | 0.002 | | | *1 | | | - | | |
| Total areal ratio of dimples at surface of expanded beads (%) | *1 | | | 3% | | | *1 | | | - | | |
| Average diameter of dimples at surface of expanded beads ($\mu$.m) | *1 | | | 32.0 | | | *1 | | | - | | |
| Average bead diameter of expanded beads (mm) | 3.1 | | | 3.2 | | | 3.1 | | | - | | |
| Cell size of expanded beads ($\mu$.m) | 98 | | | 139 | | | 53 | | | - | | |
| Molding heating pressure (MPa (G)) | 0.05 | 0.06 | 0.07 | 0.06 | 0.07 | 0.08 | - | - | - | - | - | - |
| Cooling time upon molding (minutes) | 10.5 | 13.5 | 15.3 | 4.9 | 10.9 | 13.3 | - | - | - | - | - | - |
| Density of expanded-bead molded article | 17.7 | 17.6 | 17.8 | 17.0 | 17.0 | 16.9 | 17.0 | 17.2 | 17.1 | - | - | - |
| Internal fusion bonding ratio (%) | 60 | 80 | 90 | 30 | 45 | 60 | - | - | - | - | - | - |

(continued)

|  | Comparative Example 1 | | | Comparative Example 2 | | | Comparative Example 3 | | | Comparative Example 4 | | |
|---|---|---|---|---|---|---|---|---|---|---|---|---|
| Flexural strength of expanded-bead molded article (MPa) | - | - | 0.26 | - | 0.27 | - | - | - | - | - | - | - |

In the table, St: styrene, DOP: di-2-ethylhexyl phthalate, *1: A mesh pattern at the surface of expanded beads is not confirmed, *2: The generated plural beads are adhering to one another.

[Table 7]

|  | Comparative Example 5 | | | Comparative Example 6 | | |
|---|---|---|---|---|---|---|
| Monomer composition Monomer composition | St 100% | | | St 100% | | |
| Polymerization conversion ratio upon addition of foaming agent (%) | 81% | | | 81% | | |
| Plasticizer | BS | | | - | | |
| Amount of addition of plasticizer (weight%) | 1.0 | | | - | | |
| Content of foaming agent (weight%) | 8.7 | | | 9.0 | | |
| Number of voids in surface layer of expandable resin beads (voids/100 $\mu m^2$) | 0.05 | | | 0 | | |
| Number of dimples at surface of expandable resin beads (dimples/100 $\mu m^2$) | 5.2 | | | 0 | | |
| Number average molecular weight | 64000 | | | 70000 | | |
| Weight average molecular weight | 253000 | | | 265000 | | |
| Z average molecular weight | 589000 | | | 602000 | | |
| Bulk density of expanded beads (kg/m$^3$) | 16.4 | | | 16.4 | | |
| Apparent density of expanded beads: X (g/cm$^3$) | 0.026 | | | 0.026 | | |
| Secondary expansion ratio of expanded beads | 1.52 | | | 1.55 | | |
| -7.00X+1.61 | 1.43 | | | 1.43 | | |
| Number of dimples at surface of expanded beads (dimples/$\mu m^2$) | 0.003 | | | *1 | | |
| Total areal ratio of dimples at surface of expanded beads (%) | 15% | | | *1 | | |
| Average diameter of dimples at surface of expanded beads ($\mu m$) | 23.3 | | | *1 | | |
| Average bead diameter of expanded beads (mm) | 3.2 | | | 3.3 | | |
| Cell size of expanded beads ($\mu m$) | 85 | | | 55 | | |
| Molding heating pressure (MPa(G)) | 0.06 | 0.07 | 0.08 | - | - | - |
| Cooling time upon molding (minutes) | 7.2 | 11.1 | 13.0 | - | - | - |
| Density of expanded-bead molded article (kg/m$^3$) | 17.2 | 17.1 | 17.2 | - | - | - |
| Internal fusion bonding ratio (%) | 40 | 60 | 80 | - | - | - |

(continued)

| | Comparative Example 5 | | | Comparative Example 6 | | |
|---|---|---|---|---|---|---|
| Flexural strength of expanded-bead molded article (MPa) | - | - | 0.25 | - | - | - |

In the table, St: styrene, BS: butyl stearate
*1: A mesh pattern at the surface of expanded beads is not confirmed

[Table 8]

| | Comparative Example 7 | Comparative Example 8 | Comparative Example 9 |
|---|---|---|---|
| Monomer composition | St 100% (containing flame retardant) | St 100% (containing flame retardant) | St 100% (containing flame retardant) |
| Polymerization conversion ratio upon addition of foaming agent (%) | 76% | 76% | 76% |
| Plasticizer | GTS | GTS | GTS |
| Amount of addition of plasticizer (weight%) | 1.0 | 1.0 | 1.0 |
| Content of foaming agent (weight%) | 5.4 | 5.4 | 5.4 |
| Number of voids in surface layer of expandable resin beads (voids/100 $\mu m^2$) | 0 | 0 | 0 |
| Number of dimples at surface of expandable resin beads (dimples/100 $\mu m^2$) | 0 | 0 | 0 |
| Number average molecular weight | 76000 | 76000 | 76000 |
| Weight average molecular weight | 222000 | 222000 | 222000 |
| Z average molecular weight | 442000 | 442000 | 442000 |
| Bulk density of expanded beads (kg/m$^3$) | 15.0 | 19.9 | 27.2 |
| Apparent density of expanded beads: X (g/cm$^3$) | 0.024 | 0.032 | 0.044 |
| Secondary expansion ratio of expanded beads | 1.57 | 1.41 | 1.33 |
| -7.00X+1.61 | 1.44 | 1.39 | 1.30 |

(continued)

| | Comparative Example 7 | | | Comparative Example 8 | | | Comparative Example 9 | | |
|---|---|---|---|---|---|---|---|---|---|
| Number of dimples at surface of expanded beads (dimples/$\mu$m$^2$) | *1 | | | *1 | | | *1 | | |
| Total areal ratio of dimples at surface of expanded beads (%) | *1 | | | *1 | | | *1 | | |
| Average diameter of dimples at surface of expanded beads ($\mu$m) | *1 | | | *1 | | | *1 | | |
| Average bead diameter of expanded beads (mm) | 4.0 | | | 3.0 | | | 2.1 | | |
| Cell size of expanded beads ($\mu$m) | 81 | | | 55 | | | 75 | | |
| Molding heating pressure (MPa(G)) | 0.05 | 0.06 | 0.07 | 0.06 | 0.07 | 0.08 | 0.05 | 0.06 | 0.07 |
| Cooling time upon molding (minutes) | 3.7 | 4.1 | 6.9 | 6.1 | 9.9 | 14.0 | 11.0 | 10.2 | 15.2 |
| Density of expanded-bead molded article (kg/m$^3$) | 15.9 | 15.9 | 16.0 | 21.0 | 20.9 | 20.8 | 28.7 | 28.6 | 28.8 |
| Internal fusion bonding ratio (%) | 60 | 45 | 80 | 5 | 25 | 60 | 15 | 25 | 80 |
| Flexural strength of expanded-bead molded article (MPa) | - | - | 0.24 | - | - | 0.3 | - | - | 0.46 |

In the table, St: styrene, GTS: glycerin tristearate
*1: A mesh pattern at the surface of expanded beads is not confirmed

FIG. 2 presents a graph plotting the cooling time upon molding against the internal fusion bonding ratio of the molded article. Furthermore, FIG. 3 presents an electron microscopic photograph of the surface of an expanded bead obtained in Example 1, and FIG. 4 presents an electron microscopic photograph of the surface of an expanded bead obtained in Comparative Example 1.

It can be seen from the Tables 1 to 8 and FIG. 2 that in the respective Examples of the present invention, even in the case of molding a molded article having an internal fusion bonding ratio of 50% or greater, the cooling time ends in 2 to 9 minutes, while in the Comparative Examples, the cooling time takes 10 minutes or longer. It is revealed in a comparison of the flexural strength of the respective Examples of the present invention and Comparative Examples, that there is almost no change in the values, and thus the molded articles of the Examples of the present invention do not suffer from an impairment of the strength of molded articles even if molded in a short time.

Example 17

The expandable styrene resin beads obtained in Example 14 were introduced into a foaming machine of ordinary pressure batch type having an internal capacity of 30 liters, and steam was supplied therein to heat the expandable resin beads. The expandable resin beads were expanded to a bulk density of 14.9 kg/m$^3$. The obtained expanded beads were aged for one day at room temperature, and then molding of a plate-shaped molded article having a size of 300 mm x 200 mm x 25 mm was carried out using a molding machine (VS-300 manufactured by Daisen Industrial Co., Ltd.). A specimen having a dimension of 200 mm x 25 mm x 10 mm was cut out from the obtained molded article and was aged for one day at 23°C. A combustion test was performed by the method described in JIS A 9511. Furthermore, a specimen having a dimension of 200 mm x 200 mm x 25 mm was cut out from the obtained expanded-bead molded article, and the thermal conductivity of a molded article formed from the expanded styrene resin beads was measured according to the heat flow meter method (HFM method) of JIS A 1412-2.

Combustion test

A molded article formed from the expanded styrene resin beads containing a flame retardant, was subjected to a combustion test according to JIS A 9511. Pursuant to the decision on the acceptance in connection with JIS A 9511, the instance in which fire was extinguished within 3 seconds, without any residual ash, and combustion was not sustained beyond the limit line, was considered acceptable.

Thermal conductivity (W/m-K) of molded article formed from expanded styrene resin beads

The thermal conductivity of the molded article formed from expanded styrene resin beads was measured according to the heat flow meter method (HFM method) of JIS A 1412-2. A specimen having a dimension of 200 x 200 x 25 mm was cut out from the molded article formed from expanded styrene resin beads, and the specimen was interposed between a heating plate and a cooling plate of the measuring apparatus. Measurement was performed under the conditions of a specimen temperature difference of 30°C and a specimen average temperature of 20°C.

Example 18

The production was carried out in the same manner as in Example 17, except that the expandable styrene resin beads obtained in Example 14 were introduced into a foaming machine of ordinary pressure batch type having an internal capacity of 30 liters, steam was supplied therein to heat the expandable resin beads, the expandable resin beads were expanded to a bulk density of 20. 0 kg/m$^3$, and thus expanded beads were obtained.

Example 19

The production was carried out in the same manner as in Example 17, except that the expandable styrene resin beads obtained in Example 14 were introduced into a foaming machine of ordinary pressure batch type having an internal capacity of 30 liters, steam was supplied therein to heat the expandable resin beads, the expandable resin beads were expanded to a bulk density of 27.0 kg/m$^3$, and thus expanded beads were obtained.

Comparative Example 10

The production was carried out in the same manner as in Example 17, except that the expandable styrene resin beads obtained in Comparative Example 7 were introduced into a foaming machine of ordinary pressure batch type having an internal capacity of 30 liters, steam was supplied therein to heat the expandable resin beads, the expandable resin beads were expanded to a bulk density of 15.0 kg/m$^3$, and thus expanded beads were obtained.

Comparative Example 11

The production was carried out in the same manner as in Example 17, except that the expandable styrene resin beads obtained in Comparative Example 7 were introduced into a foaming machine of ordinary pressure batch type having an internal capacity of 30 liters, steam was supplied therein to heat the expandable resin beads, the expandable resin beads were expanded to a bulk density of 19.9 kg/m$^3$, and thus expanded beads were obtained.

Comparative Example 12

The production was carried out in the same manner as in Example 17, except that the expandable styrene resin beads obtained in Comparative Example 7 were introduced into a foaming machine of ordinary pressure batch type having an internal capacity of 30 liters, steam was supplied therein to heat the expandable resin beads, the expandable resin beads were expanded to a bulk density of 27.2 kg/m$^3$, and thus expanded beads were obtained.
The molded articles formed from the expanded styrene resin beads obtained in Examples 17 to 19 and Comparative Examples 10 to 12 were subjected to an evaluation of self-extinguishability. The results are presented in Table 9.
[Table 9]

| | Example | | | Comparative Example | | |
|---|---|---|---|---|---|---|
| | 17 | 18 | 19 | 10 | 11 | 12 |
| Expanded beads | Exampl e 14 | Exampl e 15 | Exampl e 16 | Comparative Example 7 | Comparative Example 8 | Comparative Example 9 |
| Bulk density of 3 expanded beads (kg/m$^3$) | 14.9 | 20.0 | 27.0 | 15.0 | 19.9 | 27.2 |
| Apparent density of 0.024 expanded beads (g/cm$^3$) | | 0.032 | 0.044 | 0.024 | 0.032 | 0.044 |
| Molding heating pressure (MPa(G)) | 0.07 | 0.08 | 0.07 | 0.07 | 0.08 | 0.07 |
| Cooling time upon molding (minutes) | 1.9 | 3.9 | 8.8 | 6.9 | 14.0 | 15.2 |
| Density of expanded-bead molded article (kg/m$^3$) | 15.9 | 21.4 | 29.0 | 16.0 | 20.8 | 28.8 |
| Internal fusion bonding ratio (%) | 70 | 75 | 80 | 80 | 60 | 80 |
| Acceptance in JIS A 9511 combustion test | Pass | Pass | Pass | Pass | Pass | Pass |
| Average extinguishing time (seconds) | 1.0 | 1.0 | 1.0 | 1.2 | 1.1 | 0.9 |
| Thermal conductivity (W/mK) | 0.0388 | 0.0353 | 0.0335 | 0.0386 | 0.0354 | 0.0336 |

INDUSTRIAL APPLICABILITY

The expanded styrene resin beads of the present invention can give an expanded-bead molded article having excellent fusion bondability among expanded beads, irrespective of the expanded-bead molded article being an expanded-bead molded article of a general shape or a bulky expanded-bead molded article such as a block molded article, and also can shorten the cooling time when the expanded beads are subjected to in-mold molding to obtain an expanded-bead molded article. Therefore, the productivity of expanded-bead molded articles can be enhanced. Furthermore, the expanded-bead molded article of the present invention has excellent strength such as flexural strength, and thus can be suitably used in large-size polystyrene resin bead molded articles, which are used in EPS construction methods or as void slabs.

**Claims**

1. Expanded styrene resin beads made of a styrene resin as the base resin, having an average bead diameter of 0.5 to 10 mm and an apparent density of 0.013 to 0.15 g/cm$^3$, wherein the expanded beads each have a number of dimples having a maximum diameter of 5 to 100 μm formed at the surface, and the secondary expansion ratio determined by secondarily expanding the expanded beads under the conditions of a heating steam temperature of 107°C and a heating time of 120 seconds, and then dividing the apparent density (g/cm$^3$) of the expanded beads before the secondary expansion by the apparent density (g/cm$^3$) of the expanded beads after the secondary expansion, satisfies expression (1):

```
Secondary expansion ratio ≤ -7.00 × {apparent density of

expanded beads before secondary expansion (g/cm³)} + 1.61

(Expression 1)
```

2. The expanded styrene resin beads according to claim 1, wherein the dimples present at the surface of the expanded beads form a mesh pattern.

3. The expanded styrene resin beads according to claim 1, wherein the dimples present at the surface of the expanded beads and having a maximum diameter of 5 to 100 μm, have an average diameter of 10 to 70 μm, and the number of the dimples per unit area is 0.005 to 0.05 dimples/μm$^2$.

4. The expanded styrene resin beads according to claim 1, wherein the dimples present at the surface of the expanded beads have an maximum depth of 1 to 20 μm.

5. The expanded styrene resin beads according to claim 1, wherein the total areal ratio of the dimples is 20 to 100%.

6. A molded article formed from expanded styrene resin beads having a density of 0.008 to 0.1 g/cm$^3$ and a thickness of 10 cm or more, produced by charging the expanded styrene resin beads according to any one of claims 1 to 5 into a mold, heating the expanded beads in the mold, allowing the expanded beads to be fusion bonded with one another, and removing the resultant foam from the mold after cooling.

FIG. 1

| Total Area of Dimples ; S 1 (mm²) |
| :--- |
| ＊Total area of dimples is the sum of areas of respective dimples |
| Area of square inscribed on photograph S 2 (mm²) |

Dimple (Opening)

Rim

**Total Areal Ratio of Dimples (%)** = S 1 (mm²) ／S 2 (mm²) × 1 0 0

FIG. 2

FIG. 3

200x 50.0 μm WD:11.0mm 1.5kV 2007/02/14 16:39:51 S

FIG. 4

200x 50.0 μm WD:12.6mm 1.5kV 2007/07/17 15:52:21 S

FIG. 5

200x 50.0 μm WD:11.1mm 1kV 2007/03/13 14:20:49 S

FIG. 6

200x 50.0 μm WD: 6.0mm 1kV 2006/12/06 15:50:38 S

FIG. 7

FIG. 8

FIG. 9

FIG. 10

FIG. 11

1,000x 10.0 μm WD: 8.2mm 1kV 2007/04/09 13:44:17 S

FIG. 12

1,000x 10.0 μm WD: 7.3mm 1kV 2007/04/12 14:01:38 S

## INTERNATIONAL SEARCH REPORT

| | International application No. |
|---|---|
| | PCT/JP2008/068367 |

**A. CLASSIFICATION OF SUBJECT MATTER**
*C08J9/20(2006.01)i, C08J9/232(2006.01)i*

According to International Patent Classification (IPC) or to both national classification and IPC

**B. FIELDS SEARCHED**

Minimum documentation searched (classification system followed by classification symbols)
C08J9/16-9/236

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2001-81112 A (Sekisui Plastics Co., Ltd.), 27 March, 2001 (27.03.01), Claims; Par. Nos. [0017] to [0039]; example 5 (Family: none) | 1-6 |
| A | JP 2002-356576 A (Sekisui Plastics Co., Ltd.), 13 December, 2002 (13.12.02), Claims; Par. Nos. [0014] to [0029] (Family: none) | 1-6 |
| A | JP 2003-327739 A (Mitsubishi Kagaku Fomu Purasutikku Kabushiki Kaisha), 19 November, 2003 (19.11.03), Claims; Par. Nos. [0011] to [0039] (Family: none) | 1-6 |

[X] Further documents are listed in the continuation of Box C.    [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 08 December, 2008 (08.12.08) | 16 December, 2008 (16.12.08) |

| Name and mailing address of the ISA/ Japanese Patent Office | Authorized officer |
|---|---|
| Facsimile No. | Telephone No. |

Form PCT/ISA/210 (second sheet) (April 2007)

42

**INTERNATIONAL SEARCH REPORT**

International application No.

PCT/JP2008/068367

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2004-307729 A  (Kaneka Corp.),<br>04 November, 2004 (04.11.04),<br>Claims; Par. Nos. [0024] to [0026], [0028],<br>[0032] to [0033]<br>(Family: none) | 1-6 |
| A | JP 2006-213850 A  (Sekisui Plastics Co., Ltd.),<br>17 August, 2006 (17.08.06),<br>Claims; Par. Nos. [0014], [0024] to [0029]<br>(Family: none) | 1-6 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 57016037 A
- JP 58056568 B
- JP 54019022 B